# EUROPEAN PATENT APPLICATION

(11) **EP 1 736 982 A1**
(43) Date of publication of application: **27.12.2006**
(21) Application number: 05721483.5
(22) Date of filing: 25.03.2005
(51) Int. Cl.: G11B 17/26

(54) **RECORDING MEDIUM REPRODUCER**

(30) Priority: 25.03.2004 JP 2004088597
(71) Applicant: Pioneer Corporation, Tokyo 153-8654 (JP); Tohoku Pioneer Corporation, Tendo-shi, Yamagata 994-8585 (JP)
(72) Inventor: SUZUKI, Toru, c/o Pioneer Corporation, Kawagoe-shi, Saitama 3508555 (JP); SHINKAI, Yasuhiro, c/o Pioneer Corporation, Kawagoe-shi, Saitama 3508555 (JP); YOSHIDA, Susumu, c/o Pioneer Corporation, Yamada, Kawagoe-shi, Saitama 3508555 (JP); SAITOU, Kazuhiro c/o Tohoku Pioneer Corporation, Tendo-shi, Yamagata 9948585 (JP); MUTO, Akihiro, c/o Pioneer Corporation, Kawagoe-shi, Saitama 3508555 (JP); MIZOGUCHI, Takashi, c/o Pioneer Corporation, Kawagoe-shi, Saitama 3508555 (JP); TAKAHASHI, Hideaki, c/o Pioneer Corporation, Kawagoe-shi, Saitama 3508555 (JP); SHIMOSAWA, Ryosuke, c/o Pioneer Corporation, Kawagoe-shi, Saitama 3508555 (JP)
(74) Representative: Grünecker, Kinkeldey, Stockmair & Schwanhäusser Anwaltssozietät
(86) International application number: PCT/JP2005/005556
(87) International publication number: WO 2005/093743

(57) **Abstract**

A recording medium playback device, by which the number of parts can be prevented from increasing and a size of the device can be prevented from being enlarged, is provided. A CD changer includes a disk receiving part, disk carrying part, positioning part, motor, and transmission restricting part 74. The disk receiving part has a plurality of holders each for holding a CD. A plurality of the holders are arranged being piled on one another and movable along the arranging direction. The disk carrying part carries the CD. The positioning part moves the disk receiving part along the arranging direction. The motor supplies drive force to both the disk carrying part and the positioning part. The transmission restricting part 74 restricts the drive force of the motor to be transmitted to the positioning part when the disk carrying part carries the CD.

## Description

### [TECHNICAL FIELD].

The present invention relates to a recording medium playback device to be mounted on a motor vehicle and so on, and particularly relates to a recording medium playback device which receives a plurality of recording media in a device body and plays back information recorded in one recording medium of the recording media.

### [BACKGROUND ART]

A recording medium playback device, which receives a plurality of recording media such as compact disks (hereinafter, CD) and plays back information recorded in a given recording medium of a plurality of the recording media, has been used (for example, see Patent Publication 1). Such a recording medium playback device includes a device body, carrying part, receiving part, positioning part, and playback part. The recording medium playback device is mounted on a motor vehicle and so on.

The device body is formed in a box-shape. The device body is provided with insertion slots, through which the respective recording media are loaded into or ejected from. The carrying part includes a motor as a drive source and a roller driven by the motor. The roller is rotated by the drive force of the motor, so that the carrying part carries the recording medium to the inside or the outside of the device body through the insertion slot.

The receiving part includes a plurality of holding members, which are arranged laid on one another. Each holding member can hold the corresponding recording medium. A plurality of the holding members are movable along a direction in which the holding members are laid on one another.

The positioning part includes a motor as a drive source and moves a plurality of the holding members along the direction, in which the holding members are laid on one another, by the drive force of the motor. The positioning part moves a plurality of the holding members so as to position the holding members at positions where the holding members can hold the respective recording media that are loaded into through the insertion slots. Also, the positioning part moves a plurality of the holding members so as to position the holding members at positions where the holding members can eject the respective held recording media through the insertion slots.

The playback part includes an optical pickup and so on, and reads out information recorded in the recording medium held by the holding member of the receiving part and plays back the information.
[Patent Publication 1] Japanese Patent Application Laid-Open No. H11-273208

### [DISCLOSURE OF THE INVENTION]

### [PROBLEMS THAT THE INVENTION IS TO SOLVE]

In the conventional recording medium playback device described above, each of the carrying part and the positioning part has the motor as the drive source. Therefore, the number of parts increases, thereby causing a size of the device to be enlarged.

It is therefore an objective of the present invention to provide a recording medium playback device, by which the number of parts can be prevented from increasing and a size of the device can be prevented from being enlarged.

### [MEANS OF SOLVING THE PROBLEMS]

In order to solve the above problems and to attain the above objective, a recording medium playback device according to the present invention is a recording medium playback device including:
a drive source;
a receiving part for receiving a plurality of holding members arranged being laid on one another, said holding member being capable of holding a recording medium;
a playback part for playing back the recording medium received in the receiving part;
a carrying part for carrying the recording medium through an insertion slot by drive force of the drive source;
a positioning part for moving the holding member along a direction of the arrangement of the holding members by drive force of the drive source so as to position the holding member at a position where the holding member can hold the recording medium carried through the insertion slot; and
a transmission restricting part for restricting the drive force of the drive source to be transmitted to the positioning part when the carrying part carries the recording medium.

### [BRIEF DESCRIPTION OF THE DRAWINGS]

[FIG. 1] A perspective view illustrating an appearance of a CD changer as a recording medium playback device according to a preferred embodiment of the present invention
[FIG. 2] A perspective view illustrating a fixing chassis, disk carrying part, disk playback part, disk receiving part and separating mechanism assembled to one another of the CD changer shown in Fig. 1
[FIG. 3] An exploded perspective view illustrating a part of the fixing chassis, disk playback part and disk receiving part shown in Fig. 2
[FIG. 4] A perspective view illustrating an assembled state of the disk receiving part and a drive chassis shown in Fig. 3
[FIG. 5] A perspective view illustrating the holders of the disk receiving part and the separating mechanism shown in Fig. 2
[FIG. 6] An enlarged perspective view illustrating the separating mechanism shown in Fig. 5
[FIG. 7] A perspective view illustrating a state when a movable member of the separating mechanism shown in Fig. 6 is parted most from the second wall so that a projection of one holder faces a guide groove
[FIG. 8] A perspective view illustrating a state when a cam member of the separating mechanism shown in Fig. 7 is rotated so that the projection is positioned at a playback part of the guide groove
[FIG. 9] A perspective view illustrating a state when a movable member of the separating mechanism shown in Fig. 6 approaches most the second wall so that a projection of one holder faces a guide groove
[FIG. 10] A perspective view illustrating a state when a cam member of the separating mechanism shown in Fig. 7 is rotated so that the projection is positioned at a loading part of the guide groove
[FIG. 11] An enlarged perspective view illustrating the separating mechanism shown in Fig. 6
[FIG. 12] A perspective view illustrating a state when the cam member and a movable member of the separating mechanism shown in Fig. 11 are located most above
[FIG. 13] A perspective view illustrating a state when the movable member of the separating mechanism shown in Fig. 11 is located most above and the cam member is located at the middle
[FIG. 14] An exploded perspective view of the separating mechanism shown in Fig. 11
[FIG. 15] A circumferential development of the cam member, rotating member, and movable member of the separating mechanism shown in Fig. 6
[FIG. 16] A development schematically illustrating a state when a guide groove of the cam member shown in Fig. 15 faces a projection of a holder
[FIG. 17] A development schematically illustrating a state when the cam member is rotated from the state shown in Fig. 16 so that the projection is started to be inserted into the guide groove
[FIG. 18] A development schematically illustrating a state when the cam member is further rotated from the state shown in Fig. 17 so that the projection is located in a loading part of the guide groove
[FIG. 19] A development schematically illustrating a state when the cam member is further rotated from the state shown in Fig. 18 so that the projection is located in a pickup entering part of the guide groove
[FIG. 20] A development schematically illustrating a state when the cam member is further rotated from the state shown in Fig. 19 so that the projection is positioned in a clamp part of the guide groove
[FIG. 21] A development schematically illustrating a state when the cam member is further rotated from the state shown in Fig. 20 so that the projection is positioned in a playback part of the guide groove
[FIG. 22] A development schematically illustrating a state when a projection of the second holder from the bottom shown in Fig. 21 is positioned in the playback part of the guide groove
[FIG. 23] A development schematically illustrating a state when a projection of the second holder from the top shown in Fig. 21 is positioned in the playback part of the guide groove
[FIG. 24] A development schematically illustrating a state when the cam member shown in Fig. 15 approaches most the second wall
[FIG. 25] A development schematically illustrating a state when a projection of a holder faces the guide groove of the cam member shown in Fig. 24
[FIG. 26] A development schematically illustrating a state when the cam member is rotated from the state shown in Fig. 25 so that the projection is started to be inserted into the guide groove
[FIG. 27] A development schematically illustrating a state when the cam member is further rotated from the state shown in Fig. 26 so that the projection is positioned in a loading part of the guide groove
[FIG. 28] A development schematically illustrating a state when a projection of the second holder from the top shown in Fig. 27 is positioned in the loading part of the guide groove
[FIG. 29] A development schematically illustrating a state when a projection of the second holder from the bottom shown in Fig. 27 is positioned in the loading part of the guide groove
[FIG. 30] A plan view illustrating the movable part in a state shown in Fig. 15
[FIG. 31] A plan view illustrating the movable part in a state shown in Fig. 16
[FIG. 32] A plan view illustrating the movable part in a state shown in Fig. 22
[FIG. 33] A plan view illustrating the movable part in a state shown in Fig. 23
[FIG. 34] A plan view illustrating the movable part in a state shown in Fig. 24
[FIG. 35] A plan view illustrating the movable part in a state shown in Fig. 25
[FIG. 36] A plan view illustrating the movable part in a state shown in Fig. 28
[FIG. 37] A plan view illustrating the movable part in a state shown in Fig. 29
[FIG. 38] A plan view illustrating a construction of a transmission restricting part of the CD changer shown in Fig. 1
[FIG. 39] A plan view illustrating a state when the transmission restricting part shown in Fig. 38 is positioned at the parting position
[FIG. 40] A plan view viewed from the bottom illustrating a primary part of the transmission restricting part shown in Fig. 38
[FIG. 41] A plan view viewed from the bottom illustrating a primary part of the transmission restricting part shown in Fig. 39
[FIG. 42] A side view illustrating a disk carrying part and a motive power transmitting part in a state shown in Fig. 24
[FIG. 43] A side view illustrating a state when the disk carrying part moves upward from the state shown in Fig. 42
[FIG. 44] A side view illustrating a state when the disk carrying part further moves upward from the state shown in Fig. 43

### [ABBREVIATION NUMERALS]

1: CD changer (recording medium playback device)
2: CD (recording medium)
3: device body
4: disk carrying part (carrying part)
6: disk receiving part (receiving part)
10: insertion slot
19: holder (holding member)
20: motor (second drive source)
21: separating mechanism (separating element)
22: positioning part
41: motor (drive source)
66: optical pickup (playback part)
74: transmission restricting part
K: arranging direction of holders (holding members)

### [BEST MODE FOR CARRING OUT THE INVENTION]

In the following, a recording medium playback device according to a preferred embodiment of the present invention is explained. In the recording medium playback device, when the carrying part carries the recording medium, the transmission restricting part restricts the drive force of the drive source to be transmitted to the positioning part. Thus, when the carrying part carries the recording medium, the transmission restricting part cuts the transmission of the motive power to the positioning part so as to prevent the positioning part from moving the holding member.

Thus, the transmission restricting part prevents the positioning part from moving the holding member when the carrying part carries the recording medium, so that the holding member can hold the recording medium carried by the carrying part and the carrying part can securely eject the recording medium held by the holding member. Therefore, even if the drive force of the drive source is transmitted to both the carrying part and the positioning part, the carrying part can securely carry the recording medium.

In the present invention, the carrying part may be movable together with the playback part.

Further, in the present invention, the transmission restricting part may be displaced in the range between the connecting position and the parting position by the drive force from the second drive source that is to drive the separating element.

### [EXAMPLES]

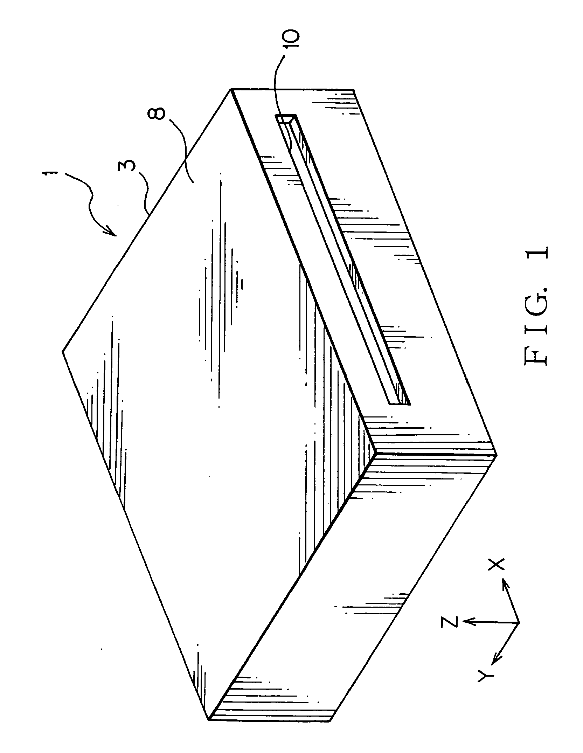

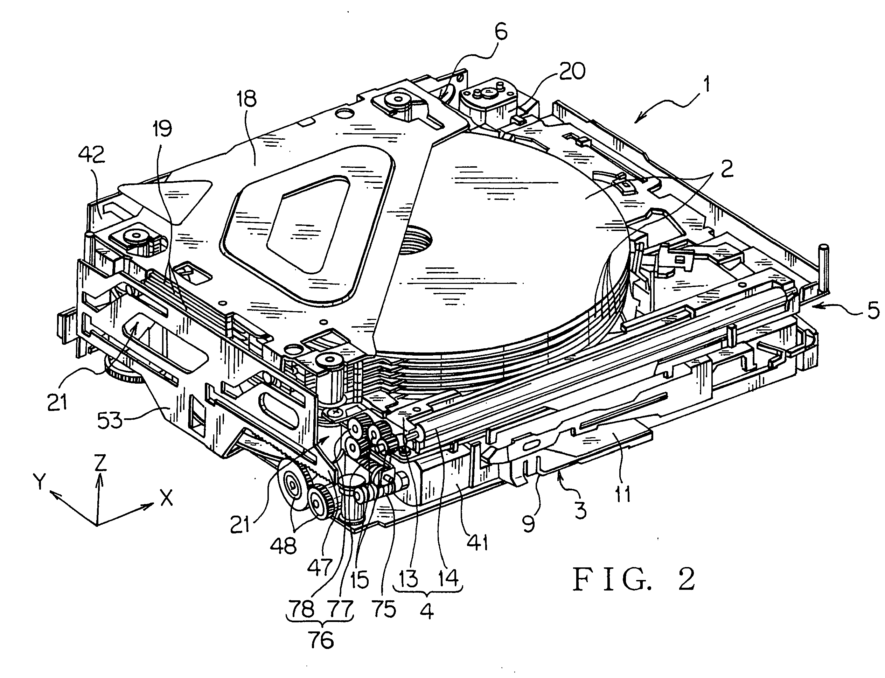

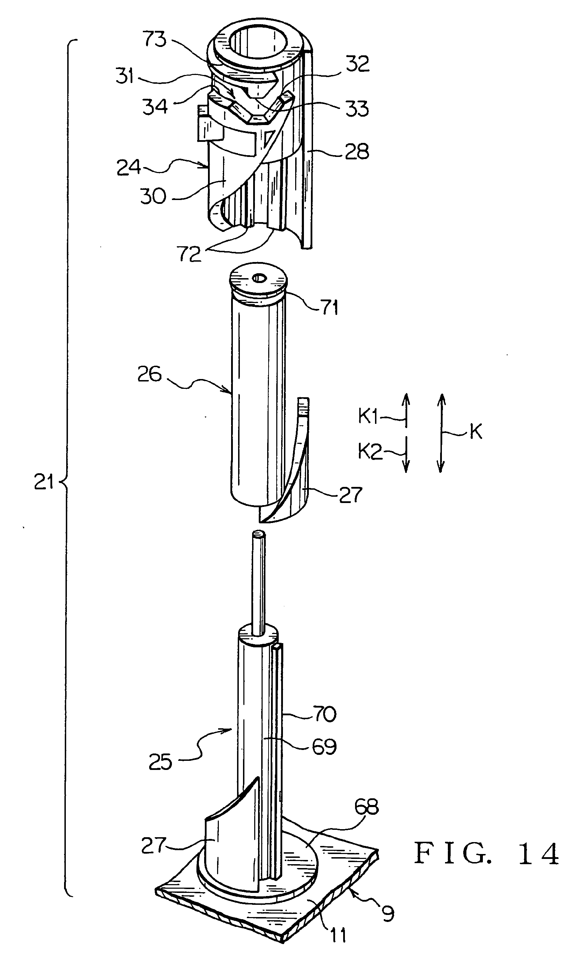

In the following, a CD changer 1 as an example of a recording medium playback device according to a preferred embodiment of the present invention is explained with reference to Figs. 1 - 44. The CD changer 1 shown in Fig. 1 is mounted on a mobile unit such as a motor vehicle, receives a plurality of CDs 2 (shown in Fig. 2) as recording media, reads out (i.e. plays back) information recorded in a given CD 2 of a plurality of the CDs 2, and outputs the information in a form of sound (or voice). The CD 2 is formed in a disk-shape and is a recording medium in which information is recorded, said information being able to be read out by an electronic instrument such as a computer.

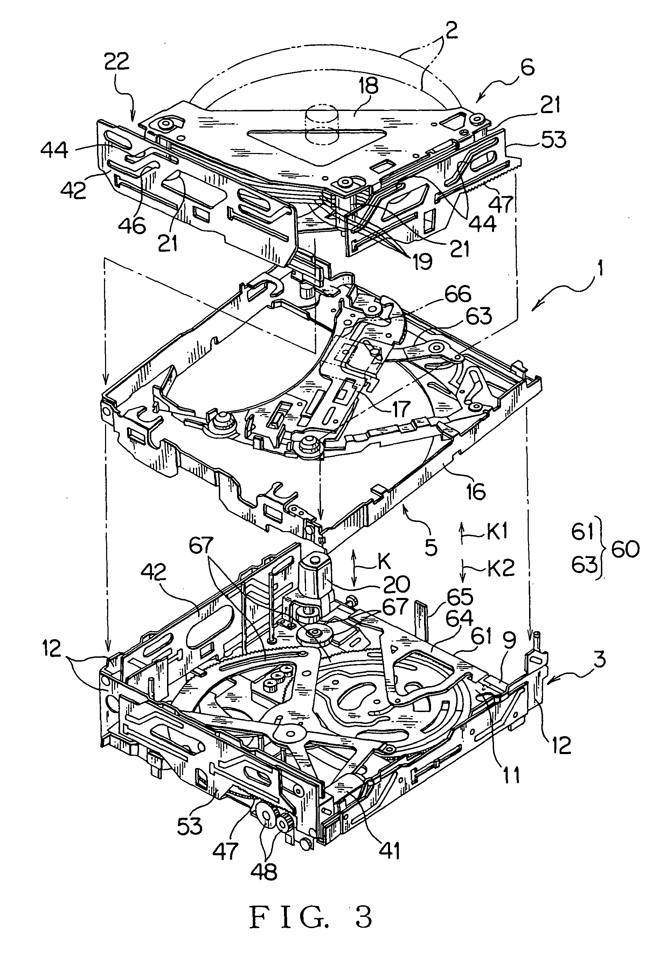

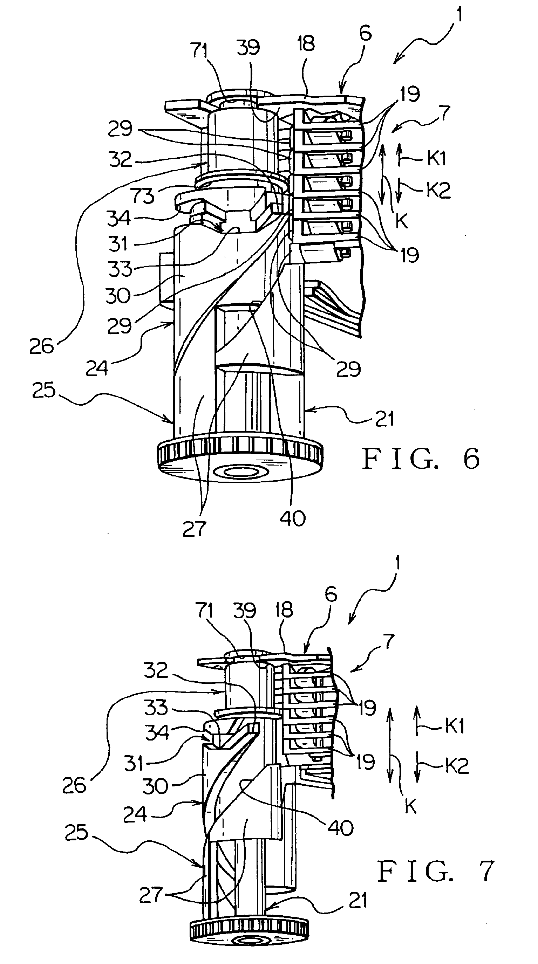

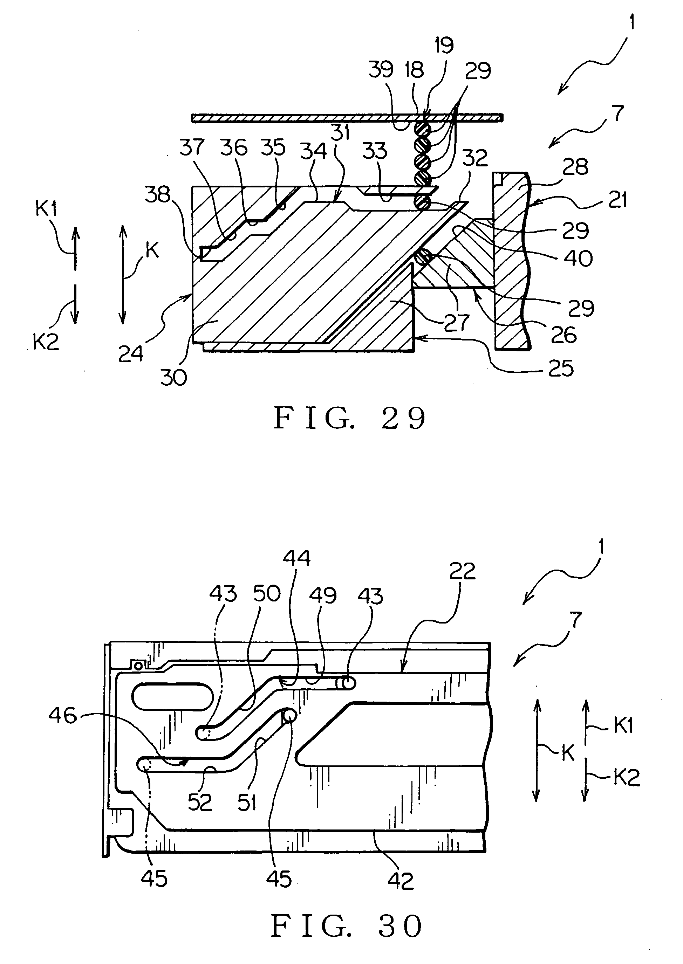

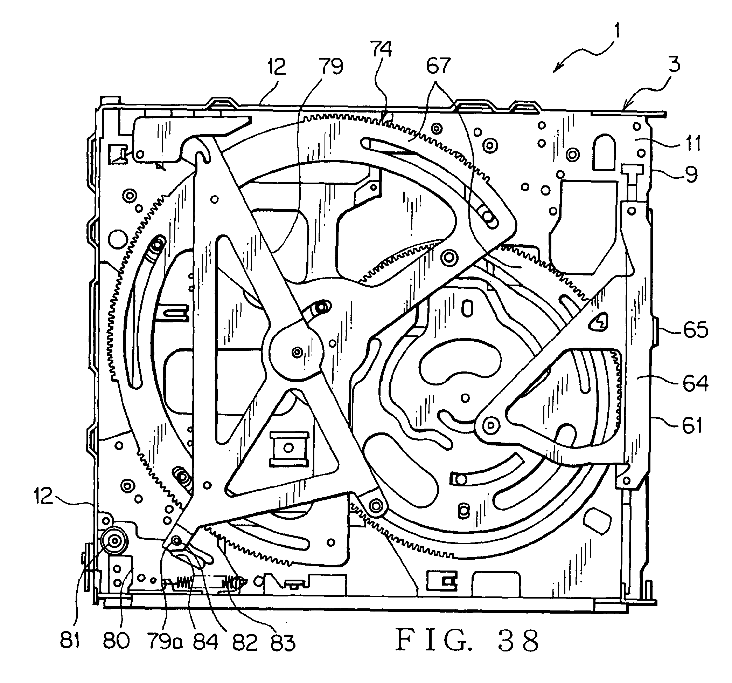

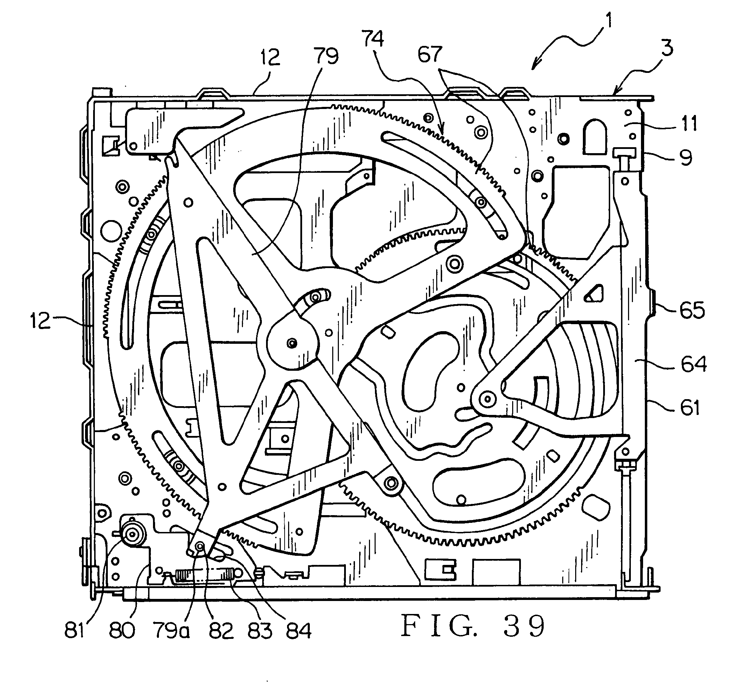

As shown in Fig. 2, the CD changer 1 includes a device body 3 (shown in Fig. 1), operation part (not shown in the figure), motor 41 (shown in Fig. 3) as the drive source, disk carrying part 4 as the carrying part, disk playback part 5, disk receiving part 6 as the receiving part, motor 20 as the second drive source, separating mechanism 21 (shown in Figs. 6 - 14) as the separating element, positioning part 22 (shown in Figs. 30 - 37), and transmission restricting part 74 (shown in Figs. 38 and 39). Hereinafter, an arrow X in Fig. 2 is described as a width direction of the CD changer 1, an arrow Y in Fig. 2 is described as a depth direction of the CD changer 1, and an arrow Z in Fig. 2 is described as a thickness direction of the CD changer 1.

The device body 3 includes an outer case 8 made of synthetic resin shown in Fig. 1, fixing chassis 9 made of sheet metal shown in Fig. 2 and so on. The outer case 8 is formed in a flat box-shape. The outer case 8 is provided with an insertion slot 10 through which the CD 2 can be loaded into and ejected from. The insertion slot 10 penetrates through an outer wall of the outer case 8. The insertion slot 10 can pass the CD 2 therethrough. The CD 2 is loaded into the device body 3 and ejected from the device body 3 through the insertion slot 10.

The fixing chassis 9 is received in and fixed to the outer case 8. As shown in Fig. 3, the fixing chassis 9 includes a plate-shaped bottom plate 11 and circumferential plates 12 each rising up from an outer edge of the bottom plate 11. The bottom plate 11 is placed on a wall situated on the lower side of the outer case 8 in Fig. 1.

The operation part is separated from and connected to the device body 3. The operation part is operated being pressed by a user of the CD changer 1. The operation part is used to set a holder 19 (explained later on) for holding the CD 2 that is loaded into the device body 3 through the insertion slot 10. The operation part is also used to set a holder 19 for holding the CD 2 that is ejected from the device body 3 through the insertion slot 10. The operation part is used to set the CD 2, from which the information is read out, of a plurality of the CDs 2 held by a plurality of the holders 19.

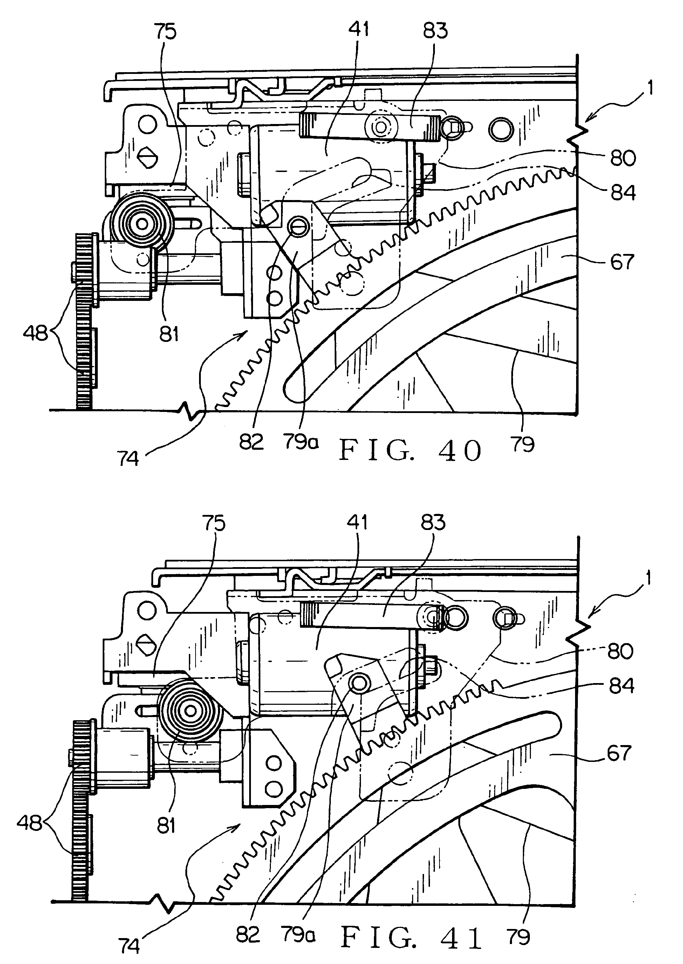

The motor 41 is attached, for example, to the bottom plate 11 of the fixing chassis 9 and arranged in the proximity of the insertion slot 10 and a circumferential plate 12 located on this side in Fig. 3. An axis of an output shaft of the motor 41 is along the longitudinal direction of the insertion slot 10, that is, along the width direction X of the device body 3. A worm 75 (shown in Figs. 40 - 44) is attached to the output shaft of the motor 41.

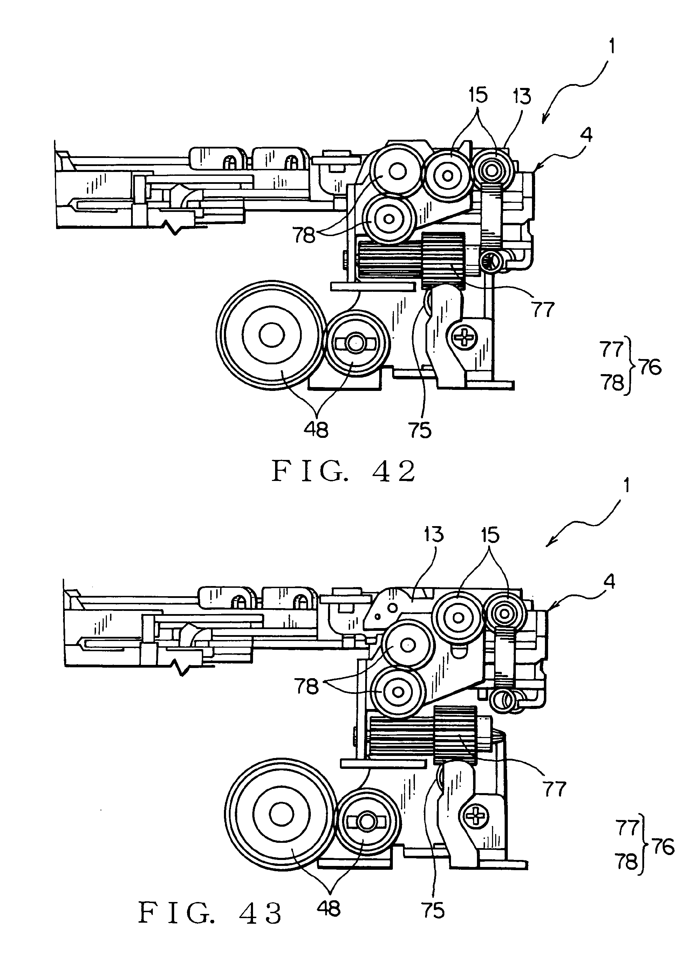

As shown in Figs. 42 - 44, the worm 75 engages with a worm wheel 77 of a motive power transmitting part 76. The motive power transmitting part 76 includes the worm wheel 77 and a pair of gears 78. The worm wheel 77 and the pair of the gears 78 are rotatably supported by the fixing chassis 9. One gear 78 of the pair of the gears 78 is arranged above the worm wheel 77 and engages with the worm wheel 77. Another gear 78 of the pair of the gears 78 is arranged above the one gear 78 and engages with the one gear 78.

The disk carrying part 4 is received in the device body 3 and as shown in Fig. 2, includes a roller arm 13, roller 14, and a pair of gears 15. The roller arm 13 is made of sheet metal or the like and formed in a belt-shape along the width direction X of the device body 3 with regard to the longitudinal direction of the roller arm 13. The roller arm 13 is arranged in the proximity of the insertion slot 10 and attached to a movable chassis 16 (explained later on) of the disk playback part 5. Therefore, the roller arm 13 is movable (that is, the disk carrying part 4 is movable) along an arrow K shown in Fig. 3 together with an optical pickup 66 (explained later on) of the disk playback part 5.

The roller 14 is supported by the roller arm 13 rotatably around an axis of the roller 14. The axis, that is, the longitudinal direction of the roller 14 is along the width direction X of the CD changer 1. The CD 2, which passes through the insertion slot 10, comes in contact with an outer peripheral surface of the roller 14.

The pair of gears 15 is rotatably attached to the roller arm 13 and arranged at one end of the roller arm 13, said end being situated in the proximity of the motor 41 in the width direction X. One gear 15 is arranged coaxially with the roller 14 and rotates integrally with the roller 14. Another gear 15 engages with the one gear 15.

When the CD 2 is carried to the inside or outside of the device body 3 through the insertion slot 10, the other gear 15 engages with the other gear 78 of the motive power transmitting part 76 when a cam member 24 (explained later on) together with the disk playback part 5 is positioned nearest to the bottom plate 11 of the fixing chassis 9, that is, positioned at the lowest. The drive force of the motor 41 as the drive source is transmitted to the roller 14 through the gear 78 and the gear 15, so that the roller 14 is rotated around its axis. The CD 2 comes in contact with the outer peripheral surface of the roller 14 and the roller 14 is driven by the motor 41, so that the disk carrying part 4 passes the CD 2 into the insertion slot 10. Thus, the disk carrying part 4 passes the CD 2 through the insertion slot 10 formed in the device body 3 and carries the CD 2 by the drive force of the motor 41.

The disk playback part 5 is received in the device body 3 and as shown in Fig. 3, includes a movable chassis 16, oscillating chassis 17, moving mechanism 60, and pickup playback part (not shown in the figure). The movable chassis 16 is made of sheet metal or the like and formed in a frame-shape. The movable chassis 16 is supported by the circumferential plate 12 of the fixing chassis 9 movable along the arrow K, which indicates an arranging direction (i.e. laminating direction) of the holders 19 of the disk receiving part 6.

The oscillating chassis 17 is made of sheet metal or the like and formed in a band plate-shape. The oscillating chassis 17 is supported by the movable chassis 16 rotatably around one end part of the oscillating chassis 17. The oscillating chassis 17 is rotatable around the one end part of the oscillating chassis 17 so that the oscillating chassis 17 can be displaced between a state when another end of the oscillating chassis 17 enters in among a plurality of the CDs 2 to be received in the disk receiving part 6 and a state when the other end of the oscillating chassis 17 comes out from among a plurality of the CDs 2 to be received in the disk receiving part 6.

As shown in Fig. 3, the moving mechanism 60 includes the first slide chassis 61, the second slide chassis 62, and an oscillating arm 63. The first slide chassis 61 is made of sheet metal and includes integrally a horizontal part 64 and a vertical piece 65. The horizontal part 64 is formed in a flat plate-shape and placed on the plate-shaped bottom plate 11 of the fixing chassis 9.

The horizontal part 64 is slidably supported by the bottom plate 11 along the longitudinal direction of the oscillating chassis 17, which is in a state that the other end of the oscillating chassis 17 comes out among a plurality of the CDs 2. The horizontal part 64 moves along the longitudinal direction of the oscillating chassis 17, which is in a state that the other end of the oscillating chassis 17 comes out among a plurality of the CDs 2, by drive force of a motor 20 (explained later on) of the separating mechanism 7. The vertical piece 65 extends upward, that is, toward the second slide chassis from an edge of the horizontal part 64.

The second slide chassis is made of sheet metal and formed in a flat plate-shape. The second slide chassis is arranged between the movable chassis 16 and the bottom plate 11 and placed on the movable chassis 16. The second slide chassis is slidably supported by the movable chassis 16 along the longitudinal direction of the oscillating chassis 17, which is in a state that the other end of the oscillating chassis 17 comes out among a plurality of the CDs 2.

The vertical piece 65 locks the second slide chassis. Therefore, the second slide chassis together with the vertical piece 65 moves along the longitudinal direction of the oscillating chassis 17, which is in a state that the other end of the oscillating chassis 17 comes out among a plurality of the CDs 2, by the drive force of the motor 20.

The oscillating arm 63 is made of sheet metal and formed in a flat plate-shape. As shown in Fig. 3, the oscillating arm 63 is formed in a L-shape in its plan view. The oscillating arm 63 is supported by the movable chassis 16 rotatably around the middle of the oscillating arm 63. One end part of the oscillating arm 63 is linked to the second slide chassis. Another end part of the oscillating arm 63 is rotatably linked to the oscillating chassis 17. When the second slide chassis slides along the longitudinal direction described above, the oscillating arm 63 rotates around the middle of the oscillating arm 63 so as to oscillate the oscillating chassis 17 around the one end of the oscillating chassis 17.

The moving mechanism 60 moves the first slide chassis 61 and the second slide chassis by the drive force of the motor 20, rotates the oscillating arm 63, and oscillates the oscillating chassis 17 around the one end of the oscillating chassis 17. The moving mechanism 60 oscillates the oscillating chassis 17 around the one end of the oscillating chassis 17 so as to move an optical pickup 66 (explained later on) to a position where the optical pickup 66 faces an information recording surface of the CD 2 held by the holder 19.

The oscillating chassis 17 is provided with the pickup playback part that includes a turntable, pickup part and so on. The turntable includes a rotating table, spindle motor and a plurality of clamp claws. The rotating table is rotatably supported by the other end of the oscillating chassis 17. The rotating table is formed in a circular plate-shape. The CD 2 is placed on a surface of the rotating table.

The spindle motor is provided between the other end of the oscillating chassis 17 and the rotating table. The spindle motor rotates the rotating table. The clamp claw is formed retractably from a surface of the rotating table. When the clamp claw projects from the surface of the rotating table, the clamp claw protrudes into a center hole of the CD 2 placed on the rotating table so as to clamp the CD 2 between the clamp claw and the rotating table.

The pickup part includes: an optical pickup 66 as the pickup part shown by alternate long and two short dashes lines in Fig. 3; and a pickup moving part. The optical pickup 66 is supported by the oscillating chassis 17 movably in a direction in which the optical pickup 66 approaches and leaves the turntable. The optical pickup 66 reads out information from the CD 2 supported by the turntable. That is, the optical pickup 66 plays back the CD 2 held by the holder 19. The pickup moving part causes the optical pickup 66 to approach and leave the turntable.

In the disk playback part 5, the other end of the oscillating chassis 17 enters into between the CDs 2, the clamp claw of the turntable clamps the CD 2, and the rotating table of the turntable rotates the CD 2. In the disk playback part 5, the optical pickup 66 reads out the information from the CD 2 rotated by the turntable.

The disk receiving part 6 is received in the device body 3 and as shown in Fig. 3, includes a movable chassis 18 as the first wall and holders 19 as a plurality of the holding members. The movable chassis 18 is made of sheet metal or the like and formed in a plate-shape. The movable chassis 18 is arranged in parallel with the bottom plate 11 of the fixing chassis 9 having a space therebetween. The disk playback part 5 is positioned between the movable chassis 18 and the bottom plate 11 of the fixing chassis 9. The movable chassis 18 is supported by the circumferential plates 12 of the fixing chassis 9 movably along the direction of the arrow K.

Each holder 19 is made of synthetic resin and formed in a plate-shape. The holder 19 has a C-shape in its plan view. The holder 19 is supported by the movable chassis 18 on a condition that the holder 19 is parallel to both the bottom plate 11 and the movable chassis 18. An opening having the C-shape of the holder 19 is arranged facing the insertion slot 10.

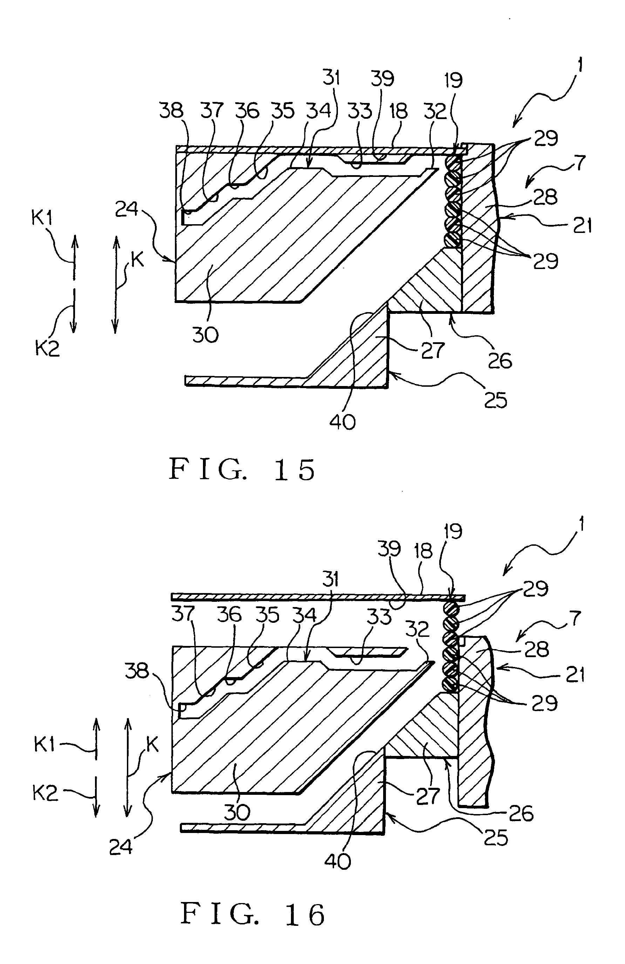

The CD 2, which is inserted in the device body 3 through the insertion slot 10, enters into the inside through the opening of the holder 19, so that the holder 19 holds the CD 2. A plurality of the holders 19 are arranged being piled on one another in such a way that surfaces of the CDs 2 held by the holders 19 are parallel to one another. The holders 19 are supported by the movable chassis 18 movably along the direction of the arrow K. Each holder 19 is provided with a projection 29 (shown in Figs. 15 - 29) projecting outward. The disk receiving part 6 receives a plurality of the holders 19 arranged being piled on one another.

As shown in Fig. 3, the motor 20 is fixed on the bottom plate 11 of the fixing chassis 9. The motor 20 is arranged at an end part in the width direction X of the device body 3 being parted away from the insertion slot 10. The motor 20 is arranged at a position forming a diagonal line of the bottom plate 11 with respect to the motor 41.

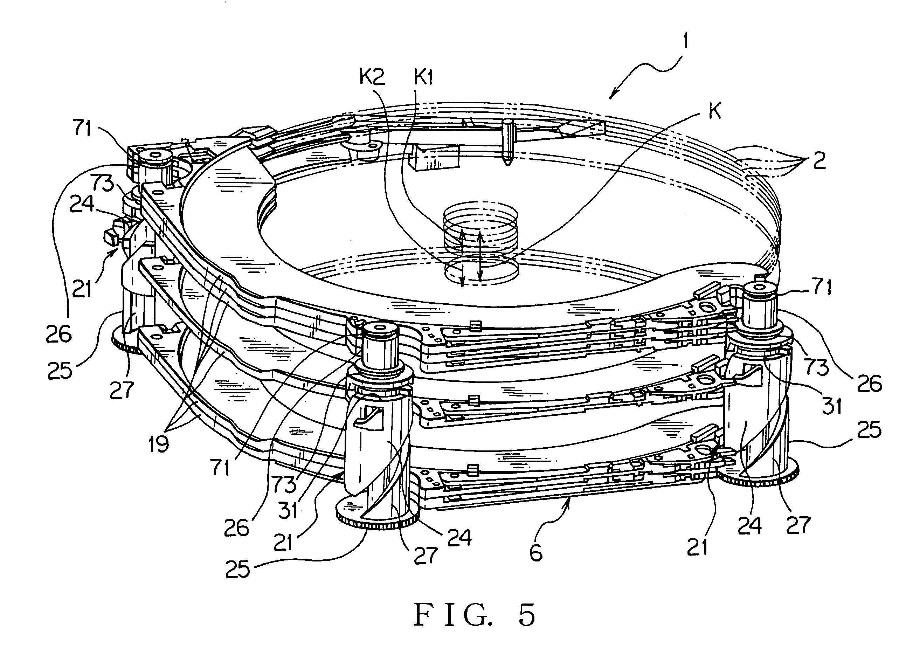

As shown in Fig. 5, there are provided three separating mechanisms 21 each arranged at a corner of the device body 3. As shown in Figs. 6 - 14, the separating mechanism 21 is formed in a cylindrical shape and includes a rotating member 25, movable member 26 and cam member 24.

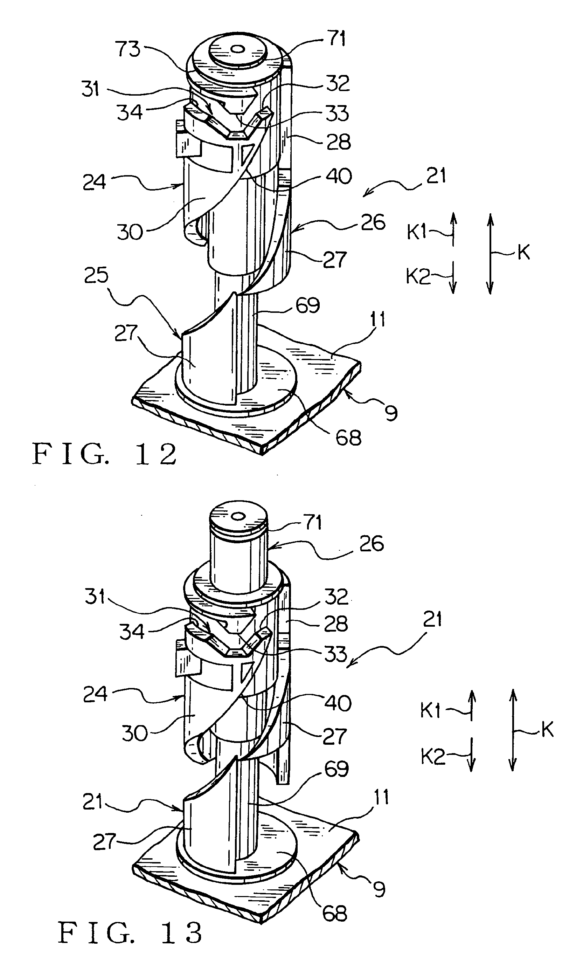

As shown in Figs. 12 - 14, the rotating member 25 integrally includes a circular plate 68 and a circular cylinder 69 arranged coaxially with each other. The circular plate 68 is formed in a circular plate-shape and supported by the bottom plate 11 of the fixing chassis 9 rotatably around the axis. The circular cylinder 69 is formed in a circular cylinder-shape and rises up from the circular plate 68.

The axis of the rotating member 25 is parallel to the direction of the arrow K. In the rotating member 25, teeth formed along an outer periphery of the circular plate 68 engage with a gear 67 (explained later on) of the transmission restricting part 74 provided rotatably on the bottom plate 11. The rotating member 25 is linked to a pinion attached to an output shaft of the motor 20 through the gear 67.

The rotating member 25 together with the gear 67 is rotated around the axis by drive force of the motor 20. The rotating member 25 allows the movable member 26 and the cam member 24 to be arranged coaxially with each other and allows the movable member 26 and the cam member 24 to rotate. The motor 20 supplies the drive force to the separating mechanism 21.

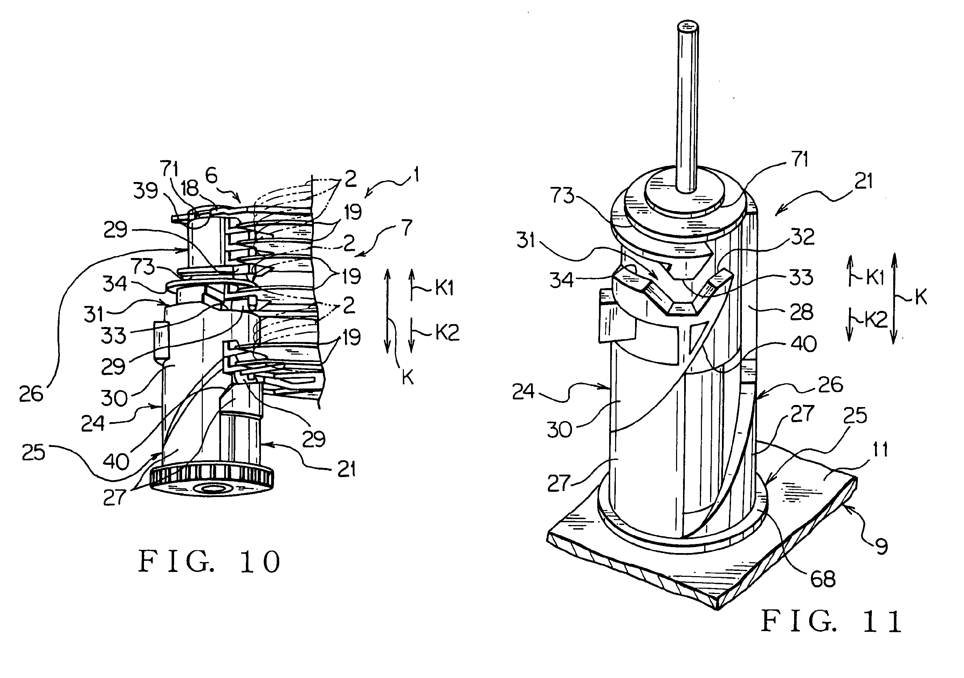

As shown in Figs. 11 - 14, the movable member 26 is formed in a circular tube-shape and attached to an outer periphery of the rotating member 25 so as to be arranged coaxially with the rotating member 25. The movable member 26 and the rotating member 25 are attached to each other by a key consisting of a projection 70 provided to the rotating member 25 and a key groove provided to the movable member 26.

The movable member 26 is attached to the rotating member 25 movably along the direction of the arrow K. The movable member 26 is movable along the direction of the arrow K independently of the cam member 24. The movable member 26 is provided with a locking groove 71 at an edge (i.e. upper end) of the movable member 26, said edge being situated on the side away from the bottom plate 11. The movable member 26 rotates around the axis integrally with the rotating member 25.

As shown in Figs. 15 - 29, the movable chassis 18 as the first wall is attached to the rotating member 25 and the movable member 26. The rotating member 25 and the movable member 26 are provided with the second wall 27. The movable chassis 18 and the second wall 27 are provided at the respective ends in the axis direction of the movable member 26 and arranged along the axis, which is parallel to the direction of the arrow K, having a distance therebetween. Therefore, the movable chassis 18 and the second wall 27 protrude from the edges of the movable member 26 toward the outer periphery.

The movable chassis 18 is attached thereto being locked to the locking groove 71 provided at the edge of the movable member 26, said edge being situated on the side away from the bottom plate 11 of the fixing chassis 9. That is, the movable chassis 18 as the first wall is provided at an upper end of the movable member 26. Therefore, the movable member 26 moves along the direction of the arrow K integrally with the movable chassis 18. The movable chassis 18 allows the movable member 26 to rotate around the axis. The movable chassis 18 is formed in a flat plate-shape along a direction crossing at right angles the direction of the arrow K.

The second wall 27 is provided over the rotating member 25 and the movable member 26. As shown in Figs. 11 - 14, as for the rotating member 25, the second wall 27 rises up from the outer edge of the circular plate 68 and has an arc-shape around the axis of the rotating member 25 in its cross section. That is, the second wall 27 is arranged along the outer periphery of the circular plate 68.

As shown in Figs. 11 - 14, as for movable member 26, the second wall 27 is provided at an edge (i.e. at a lower end of the movable member 26) of the fixing chassis 6, said edge being situated in the proximity of the bottom plate 11. The second wall 27 is arranged along the outer periphery of the movable member 26 coaxially with the movable member 26. The second wall 27 is formed in a single surface over the rotating member 25 and the movable member 26. The second wall 27 extends in a direction crossing both the direction of the arrow K and the direction crossing at right angles the direction of the arrow K, in a direction in which the second wall 27 gradually leaves the movable chassis 18 from the movable member 26 to the rotating member 25.

Between the movable chassis 18 and the second wall 27, as for a portion where a wedge part 30 (explained later on) of the cam member 24 is not positioned therebetween along the direction of the arrow K, the distance between the movable chassis 18 and the second wall 27 is equal to or approximately equal to a product of a groove width of a projection 29 in the direction of the arrow K and the number of the holders 19.

The rotating member 25 and the movable member 26 position the projection 29 between the movable chassis 18 and the second wall 27 so as to hold the holder 19. The rotating member 25 and the movable member 26 rotate around the axis so as to allow the projection 29 to move in the direction crossing at right angles the direction of the arrow K in such a manner that the projection 29 approaches and leaves a connecting wall 28 (explained later on) between the movable chassis 18 and the second wall 27.

Therefore, the cam member 24, rotating member 25 and movable member 26 are moved in a direction in which the projection 29 enters into the depth of grooves 39, 40 by the drive force of the motor 20. Further, at a receiving position (explained later on), the cam member 24, rotating member 25 and movable member 26 position all the projections 29 of the holders 19 between the movable chassis 18 and the second wall 27.

As shown in Figs. 11 - 14, the cam member 24 is formed in a circular tube-shape and attached to the outer periphery of the movable member 26 being arranged coaxially with the rotating member 25 and the movable member 26. The cam member 24 and the movable member 26 are attached to each other by a key consisting of a projection 72 of the cam member 24 and a projection of the movable member 26. The cam member 24 is attached to the movable member 26 movably along the direction of the arrow K. The cam member 24 rotates around the axis integrally with (together with) the rotating member 25 and the movable member 26.

A locking groove 73 is provided at an edge of the cam member 24, said edge being on the side situated away from the bottom plate 11. The locking groove 73 of the cam member 24 locks and attaches the movable chassis 16 of the disk playback part 5. Therefore, the cam member 24 moves along the direction of the arrow K integrally with (together with) the movable chassis 16, that is, integrally with the optical pickup 66. The movable chassis 16 allows the cam member 24 to rotate around the axis.

The cam member 24 includes a wedge part 30, guide groove 31, and connecting wall 28. The wedge part 30 is positioned between the movable chassis 18 and the second wall 27 and spaced from the connecting wall 28. Therefore, the wedge part 30 of the cam member 24 moves in the direction of the arrow K between the movable chassis 18 and the second wall 27. A groove width along the direction of the arrow K of the wedge part 30 is gradually tapered as the wedge part 30 approaches the movable member 26.

The wedge part 30 is provided with the guide groove 31. The guide groove 31 is formed on the outer periphery of the wedge part 30. That is, the guide groove 31 is formed projecting from the outer periphery of the wedge part 30. A groove width along the direction of the arrow K of the guide groove 31 is approximately equal to the width along the direction of the arrow K of a projection 29. As shown in Figs. 15 - 29, the guide groove 31 includes an opening 32 facing the connecting wall 28, loading part 33, pickup entering part 34, first connecting part 35, clamp part 36, second connecting part 37, and playback part 38. The loading part 33, pickup entering part 34, clamp part 36, and playback part 38 extend along the direction crossing at right angles the direction of the arrow K. The first connecting part 35 and second connecting part 37 extend along a direction crossing both the direction of the arrow K and the direction crossing at right angles the direction of the arrow K.

The loading part 33 continues to the opening 32 and is arranged on the side of the opening 32 situated away from the connecting wall 28. The pickup entering part 34 continues to the loading part 33 and is arranged on the side of the loading part 33 situated away from the connecting wall 28. The pickup entering part 34 is arranged on the side situated away from the second wall 27 of the rotating member 25 than the loading part 33 is arranged.

The first connecting part 35 continues to the pickup entering part 34 and is arranged on the side of the pickup entering part 34 situated away from the connecting wall 28. The first connecting part 35 extends in a direction in which the first connecting part 35 gradually approaches the second wall 27 of the rotating member 25 as the first connecting part 35 leaves the pickup entering part 34. The clamp part 36 continues to the first connecting part 35 and is arranged on the side of the first connecting part 35 situated away from the connecting wall 28.

The second connecting part 37 continues to the clamp part 36 and is arranged on the side of the clamp part 36 situated away from the connecting wall 28. The second connecting part 37 extends in a direction in which the second connecting part 37 gradually approaches the second wall 27 of the rotating member 25 as the second connecting part 37 leaves the clamp part 36. The playback part 38 continues to second connecting part 37 and is arranged on the side of the second connecting part 37 situated away from the connecting wall 28.

The guide groove 31 allows the projection 29 to enter through the opening 32. That is, the projection 29 can slide in the guide groove 31, that is, the holder 19 can slide in the guide groove 31. Further, the guide groove 31 allows the projection 29 to move in turn into the loading part 33, pickup entering part 34, first connecting part 35, clamp part 36, second connecting part 37, and playback part 38.

The holder 19, which has the projection 29 positioned in the loading part 33, faces the insertion slot 10 along the direction of the arrow K. The holder 19, which has the projection 29 positioned in the loading part 33, can hold the CD 2 loaded through the insertion slot 10 and eject the CD 2 held through the insertion slot 10 to the outside of the device body 3.

The holder 19, which has the projection 29 positioned in the pickup entering part 34, leaves the other holders 19 situated below in Fig. 2 and allows the other end of the oscillating chassis 17 (i.e. the pickup playback part) to enter between the other holder 19 situated below and said holder 19. The holder 19, which has the projection 29 positioned in the clamp part 36, allows the turntable of the disk playback part 5 to clamp the held CD 2. The holder 19, which has the projection 29 positioned in the playback part 38, is parted away from the CD 2 clamped by the turntable and does not interfere with (i.e. does not come in contact with) the CD 2 which is rotated by the turntable, that is, allows the CD 2 to rotate.

The connecting wall 28 extends straight along the direction of the arrow K. The connecting wall 28 faces the opening 32 of the guide groove 31 provided to the wedge part 30 along the direction crossing at right angles the direction of the arrow K having a distance therebetween. The connecting wall 28 connects the movable chassis 18 and the second wall 27 to each other.

Thus, the cam member 24 has the guide groove 31, with which the projection 29 of the holder 19 that holds a CD 2 engages slidably.

As shown in Fig. 11, the rotating member 25, movable member 26 and cam member 24 are arranged coaxially with each other. As shown in Figs. 11 - 13, the movable member 26 and cam member 24 are movable along the direction of the arrow K independently of each other.

The first groove 39 is defined between the movable chassis 18 and the wedge part 30 of the cam member 24. The first groove 39 is defined by the movable chassis 18 and an upper surface of the wedge part 30 of the cam member 24, said upper surface being on the side of the wedge part 30 situated away from the bottom plate 11. The first groove 39 engages with other holders 19 situated above a holder 19 that holds a CD 2, said holder 19 engaging with the guide groove 31.

The second groove 40 is defined between the second wall 27 and the wedge part 30 of the cam member 24. The second groove 40 is defined by the second wall 27 and a lower surface of the wedge part 30 of the cam member 24, said lower surface being on the side of the wedge part 30 near the bottom plate 11. The second groove 40 engages with other holders 19 situated below a holder 19 that holds a CD 2, said holder 19 engaging with the guide groove 31.

The first groove 39 and the second groove 40 allow the projections 29 of the other holders 19 except one holder 19, which holds one CD 2 and engages with the guide groove 31, to enter therein. That is, the other holders 19 slidably engage with the first groove 39 or the second groove 40. The first groove 39 and the second groove 40 are formed by a relative movement of the cam member 24 and the movable member 26.

The cam member 24 and the movable member 26 move relatively along the direction of the arrow K so that the groove widths along the direction of the arrow K of the first groove 39 and the second groove 40 are changed. When the cam member 24 slides along the direction of the arrow K, the groove width of the second groove 40 decreases when the groove width of the first groove 39 increases, while the groove width of the first groove 39 decreases when the groove width of the second groove 40 increases.

The sum of the groove width of the first groove 39 and that of the second groove 40 is equal to or approximately equal to a product of a groove width of a projection 29 in the direction of the arrow K and a number obtained by subtracting one from the number of the holders 19.

When the drive force of the motor 20 is transmitted through the gears 67 so that the rotating member 25, movable member 26 and cam member 24 integrally rotate, and one projection 29 enters in the guide groove 31. Each projection 29 of the holder 19 situated on the side of an arrow K1 (for example, see Fig. 6) relatively to the one projection 29 entered in the guide groove 31 enters into the first groove 39, while each projection 29 of the holder 19 situated on the side of an arrow K2 (for example, see Fig. 6) relatively to the one projection 29 entered in the guide groove 31 enters into the second groove 40. The arrow K1 shows one direction of the arrow K while the arrow K2 shows another direction of the arrow K.

A state when the projections 29 of all the holders 19 do not enter into the guide groove 31 but approach the connecting wall 28 so as to be situated between the movable chassis 18 and the second wall 27 is defined herein to be a state that the holders 19 are situated at the receiving position. Since the wedge part 30 of the cam member 24 is spaced from the connecting wall 28, the first and second grooves 39, 40 are in one piece at the receiving position. At the receiving position, a plurality of the holders 19 are brought closely to one another.

A state when the projections 29 enter in the playback part 38 of the guide groove 31, in the depth of the first groove 39 or that of the second groove 40 is defined herein to be a state that the holders 19 are situated at the playback position. At the playback position, due to the wedge part 30 of the cam member 24, the holder 19, the projection 29 of which enters in the guide groove 31, leaves the other holders 19 from the receiving position. At the playback position, one holder 19 holding a CD 2, that is, one holder 19 that holds a CD 2 subjected to playback of information leaves the other holders 19 and the optical pickup 66 can enter between the one holder 19 holding a CD 2 subjected to playback of information and the other holders 19.

A state when the projections 29 are situated between the movable chassis 18 and the second wall 27 of the movable member 26, the wedge part 30 of the cam member 24 is situated nearest to the rotating member 25, and the projections 29 enter into the loading part 33 of the guide groove 31, the first groove 39 or the second groove 40 is defined herein to be a state that the holders 19 are situated at the loading position.

At the playback position, each projection 29 of the holder 19 situated on the side of the arrow K1 relatively to the holder 19 holding a CD 2, that is, the holder 19 that holds a CD 2 subjected to playback of information enters into the first groove 39. The first groove 39 parts each holder 19 situated on the side of the arrow K1 away from the holder 19 holding a CD 2 subjected to playback of information.

At the playback position and the loading position, each projection 29 of the holder 19 situated on the side of the arrow K2 relatively to the holder 19 holding a CD 2 subjected to playback of information enters into the second groove 40. The second groove 40 parts each holder 19 situated on the side of the arrow K2 away from the holder 19 holding a CD 2 subjected to playback of information.

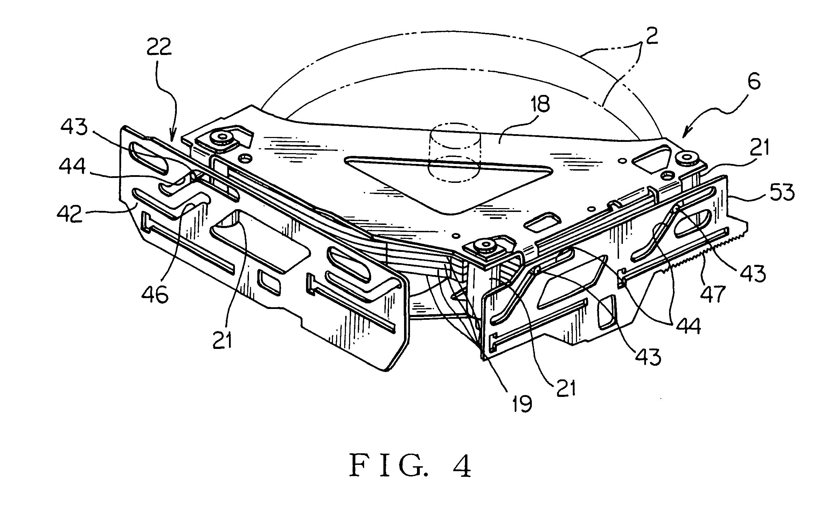

As shown in Fig. 30, the positioning part 22 includes a drive chassis 42 (shown in Figs. 3 and 4), second drive chassis 53, first projection 43, first hole 44, second projection 45, and second hole 46. In Fig. 3, there are shown two drive chassis 42 and two second drive chassis 53. However, practically, one drive chassis 42 and one second drive chassis 53 are provided.

When the holder 19 of the disk receiving part 6 is moved between the receiving position and the playback position, the positioning part 22 moves the movable member 26 along the direction of the arrow K relatively to the rotating member 25 so as to situate the movable member 26 farthest from the second wall 27 of the rotating member 25. Then, the positioning part 22 positions the cam member 24 at a position where the projection 29 of the holder 19 holding a CD 2 to be positioned at the playback position can enter into the guide groove 31.

When the holder 19 of the disk receiving part 6 is moved between the receiving position and the loading position, that is, when a CD 2 is loaded into or ejected from the device body 3, the positioning part 22 moves the cam member 24 along the direction of the arrow K relatively to the movable member 26 so as to situate the cam member 24 nearest to the second wall 27 of the rotating member 25. Then, the positioning part 22 positions the movable member 26 at a position where the projection 29 of the holder 19 holding a CD 2 positioned at the loading position can enter into the guide groove 31. The positioning part 22 moves the cam member 24 (or the movable chassis 16 of the disk playback part 5) and the movable member 26 (or the movable chassis 18 of the disk receiving part 6) together along the direction of the arrow K.

The drive chassis 42 is made of sheet metal and formed in a plate-shape. The drive chassis 42 has a rectangular shape in its plan view. The drive chassis 42 is supported by the circumferential plate 12 of the fixing chassis 9 of the device body 3 movably along a direction crossing at right angles the direction of the arrow K.

The second drive chassis 53 is made of sheet metal and formed in a plate-shape. The second drive chassis 53 has a rectangular shape in its plan view. The second drive chassis 53 is supported by the circumferential plate 12 of the fixing chassis 9 of the device body 3 movably along a direction crossing at right angles the direction of the arrow K. The second drive chassis 53 is provided with a rack 47 which engages with one of a pair of gears 48.

The pair of the gears 48 is rotatably supported by the fixing chassis 9. The pair of the gears 48 is arranged in the proximity of one circumferential plate 12 facing the insertion slot 10, that is, in the proximity of the motor 41. The pair of the gears 48 is arranged along the depth direction Y of the device body 3 and engages with each other. Another gear 48 engages with a transmitting gear 81 when the transmission restricting part 74 is positioned at a connecting position (explained later on). When the other gear 48 engages with the transmitting gear 81, the other gear 48 is rotated by the drive force of the motor 41.

The first projection 43 projects from the movable chassis 18 of the disk receiving part 6 toward the drive chassis 42 and the second drive chassis 53. The first holes 44 are provided to the drive chassis 42 and the second drive chassis 53. The first holes 44 penetrate through the drive chassis 42 and the second drive chassis 53. As shown in Fig. 4, the first projection 43 enters in the first hole 44.

As shown in Figs. 30 - 37, the first hole 44 is provided with a first parallel part 49 and a first inclined part 50. The first parallel part 49 extends straight along the direction crossing at right angles the direction of the arrow K. The first inclined part 50 continues to an end of the first parallel part 49 and extends straight along a direction crossing both the direction of the arrow K and the direction crossing at right angles the direction of the arrow K. The first inclined part 50 is inclined in a direction in which the first inclined part 50 gradually approaches the second wall 27 of the rotating member 25 as the first inclined part 50 leaves the first parallel part 49.

The second projection 45 projects from the movable chassis 16 of the disk playback part 5 toward the drive chassis 42. The second hole 46 is provided to the drive chassis 42. The second hole 46 penetrates through the drive chassis 42. The second projection 45 enters in the second hole 46.

The second hole 46 is provided with a second inclined part 51 and a second parallel part 52. The second inclined part 51 extends straight along a direction crossing both the direction of the arrow K and the direction crossing at right angles the direction of the arrow K. The second inclined part 51 is inclined in a direction in which the second inclined part 51 gradually leaves the second wall 27 of the rotating member 25 as the second inclined part 51 leaves the second parallel part 52. The second inclined part 51 is parallel to the first inclined part 50. The second parallel part 52 continues to an end of the second inclined part 51 and extends straight along the direction crossing at right angles the direction of the arrow K.

When the first projection 43 is positioned in the first inclined part 50, the second projection 45 is positioned in the second parallel part 52. When the first projection 43 is positioned in the first parallel part 49, the second projection 45 is positioned in the second inclined part 51.

The positioning part 22 moves the second drive chassis 53 along the direction crossing at right angles the direction of the arrow K by the drive force of the motor 41 as the drive source. Then, the first projection 43 moves in the first hole 44 of the second drive chassis 53 and the movable chassis 18 moves along the direction of the arrow K relatively to the second drive chassis 53. Then, the first projection 43 moves in the first hole 44 of the drive chassis 42 and the drive chassis 42 moves along the direction crossing at right angles the direction of the arrow K.

Thus, the second drive chassis 53 slides along the direction crossing at right angles the direction of the arrow K by the drive force of the motor 41 so that the drive chassis 42 slides along the direction crossing at right angles the direction of the arrow K. That is, the drive chassis 42 is moved by the drive force of the motor 41 along the direction crossing at right angles the direction of the arrow K relatively to the circumferential plate 12 of the fixing chassis 9. Thus, the positioning part 22 includes the motor 41 as a single drive source to move the cam member 24 and the movable member 26 along the direction of the arrow K.

Thus, the positioning part 22 slides the second drive chassis 53 and the drive chassis 42 by the drive force of the motor 41 so as to move the disk carrying part 4, disk playback part 5 and disk receiving part 6 along the direction of the arrow K.

When the holder 19 is positioned at the loading position, that is, when the CD 2 is loaded into or ejected from the device body 3, by the drive force of the motor 41 as the drive source, the positioning part 22 positions the drive chassis 42 at a position where the second projection 45 moves in the second parallel part 52 and the first projection 43 moves in the first inclined part 50. When the holder 19 is moved between the playback position and the receiving position, by the drive force of the motor 41, the positioning part 22 positions the drive chassis 42 at a position where the second projection 45 moves in the second inclined part 51 and the first projection 43 moves in the first parallel part 49.

When the second projection 45 is positioned in the second parallel part 52 by the positioning part 22, the cam member 24 approaches nearest to the second wall 27 of the rotating member 25. The holder 19, the projection 29 of which is positioned in the loading part 33 of the guide groove 31 of the cam member that approaches nearest to the second wall 27 of the rotating member 25, is positioned at a position where the holder 19 can hold the CD 2 to be loaded and ejected through the insertion slot 10.

When the CD 2 is loaded into and ejected from the device body 3, the positioning part 22 positions each holder 19 at a position where the corresponding projection 29 faces the opening 32 of the guide groove 31 along the direction crossing at right angles the direction of the arrow K, which guide groove 31 is provided to the cam member 24 that approaches nearest to the circular plate 68 of the rotating member 25.

At the position where the projection 29 faces the opening 32 of the guide groove 31 along the direction crossing at right angles the direction of the arrow K, which guide groove 31 is provided to the cam member 24 that approaches nearest to the circular plate 68 of the rotating member 25, the holder 19 is approximately lined up with the insertion slot 10 along the direction crossing at right angles the direction of the arrow K and can hold the CD 2, which is inserted into the device body 3 passing through the insertion slot 10.

Further, at the position where the projection 29 faces the opening 32 of the guide groove 31 along the direction crossing at right angles the direction of the arrow K, which guide groove 31 is provided to the cam member 24 that approaches nearest to the circular plate 68 of the rotating member 25, the holder 19 can eject the held CD 2 from the device body 3 to the outside through the insertion slot 10. Therefore, the positioning part 22 moves the holder 19 along the direction of the arrow K by the drive force of the motor 41 and positions the holder 19 at a position where the holder 19 can hold the CD 2 inserted into the device body 3 through the insertion slot 10.

As shown in Figs. 38 and 39, the transmission restricting part 74 includes a plurality of gears 67, oscillating arm 79, switching arm 80, and transmission gear 81. A plurality of the gears 67 are rotatably supported by the bottom plate 11 of the fixing chassis 9. One gear 67 engages with a pinion attached to an output shaft of the motor 20. A plurality of the gears 67 engage with one another.

The oscillating arm 79 is made of plate-shaped sheet metal and supported by the bottom plate 11 of the fixing chassis 9 rotatably around a center part. One end 79a of the oscillating arm 79 is arranged in the proximity of the motor 41. The one end 79a of the oscillating arm 79 is provided with a projection 82 projecting toward the bottom plate 11. When a plurality of the gears 67 are rotated by the motor 20, the oscillating arm 79 rotates around the center part so that the one end 79a approaches and leaves the one circumferential plate 12.

The switching arm 80 is made of plate-shaped sheet metal and supported by the bottom plate 11 of the fixing chassis 9 slidably in a direction in which the switching arm 80 approaches and leaves the one circumferential plate 12. The switching arm 80 is arranged between the bottom plate 11 and the oscillating arm 79 along the direction of the arrow K. The switching arm 80 is biased in a direction in which the switching arm 80 approaches the one circumferential plate 12 (i.e. toward a connecting position explained later on) by a coil spring 83 as bias means.

The switching arm 80 is provided with an engaging hole 84 (shown in Figs. 40 and 41) with which the projection 82 of the one end 79a of the oscillating arm 79 engages. The engaging hole 84 penetrates through the switching arm 80. When the oscillating arm 79 is rotated by the drive force of the motor 20, the switching arm 80 approaches and leaves the one circumferential plate 12 together with the one end 79a of the oscillating arm 79.

The transmission gear 81 is rotatably supported by an end of the switching arm 80 in the proximity of the one circumferential plate 12, that is, in the proximity of the gear 48. When the switching arm 80 is positioned in the proximity of the one circumferential plate 12, the transmission gear 81 enters into between a worm 75 attached to the output shaft of the motor 41 and the other gear 48 so as to engage with both the worm 75 and the other gear 48.

When the transmission gear 81 engages with both the worm 75 and the other gear 48, the transmission gear 81 slides the second drive chassis 53 by the drive force of the motor 41 so as to move the disk receiving part 6 along the direction of the arrow K. Therefore, when the switching arm 80 is positioned in the proximity of the one circumferential plate 12, the transmission gear 81 transmits the drive force of the motor 41 to the second drive chassis 53, that is, to the positioning part 22 through the gear 48.

When the switching arm 80 leaves the one circumferential plate 12, the transmission gear 81 comes out from between the worm 75 attached to the output shaft of the motor 41 and the other gear 48 so that the switching arm 80 ceases to engage with both the worm 75 and the other gear 48. When the switching arm 80 leaves the one circumferential plate 12, the transmission gear 81 restricts the drive force of the motor 41 to be transmitted to the positioning part 22.

The transmission restricting part 74 can move in a range between a connecting position where the transmission gear 81 enters into between the worm 75 and the other gear 48 so as to engage therewith and a parting position where the transmission gear 81 comes out from between the worm 75 and the other gear 48 so as to cease to engage therewith. By the drive force of the motor 20, the oscillating arm 79 is oscillated, the switching arm 80 approaches and leaves the one circumferential plate 12, and the transmission restricting part 74 is displaced in the range between the connecting position and the parting position.

In the transmission restricting part 74, when the CD 2 is loaded into or ejected from the device body 3, by the drive force of the motor 20 the transmission gear 81 is parted away from the one circumferential plate 12 against the bias force of the coil spring 83 and positioned at the parting position. Therefore, when the disk carrying part 4 carries the CD 2, the transmission restricting part 74 restricts the drive force of the motor 41 to be transmitted to the positioning part 22.

When information recorded in one CD 2 selected by the operation part from a plurality of the CDs 2 received in the device body 3 is read out, as shown in Figs. 38 and 40, the CD changer 1 positions the transmission restricting part 74 at the connecting position by the drive force of the motor 20. The CD changer 1 set both the disk playback part 5 and the disk receiving part 6, that is, set both the cam member 24 and the movable member 26 to be movable along the direction of the arrow K.

As shown in Fig. 15, the projections 29 of all of the holders 19 are allowed to come in contact with the connecting wall 28 by the drive force of the motor 20. Further, the other end of the oscillating chassis 17 of the disk playback part 5, that is, the turntable and the pickup playback part are being retracted from between a plurality of the CDs 2. As shown in Fig. 30, the drive chassis 42 is positioned at a position where the first projection 43 is positioned in the first parallel part 49 of the first hole 44 by the drive force of the motor 41. Then, as shown in Fig. 15, the movable chassis 18 attached to the movable member 26 is situated farthest from the second wall 27 of the rotating member 25.

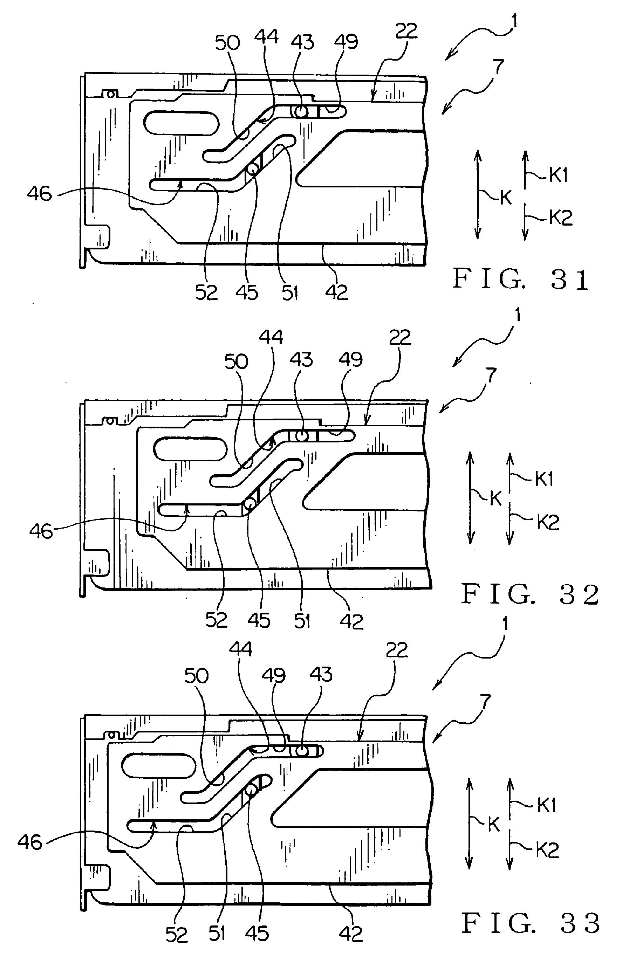

As shown in Fig. 31, the second projection 45 is moved in the second inclined part 51 of the second hole 46 by the drive force of the motor 41, so that the drive chassis 42 is positioned at a position where the projection 29 of the holder 19 holding a CD 2 selected to read out information therefrom faces the guide groove 31 along the direction crossing at right angles the direction of the arrow K.

As shown in Figs. 7 and 16, the guide groove 31 of the cam member 24 is allowed to face the projection 29 of the holder 19 holding a CD 2 selected to read out information therefrom along the direction crossing at right angles the direction of the arrow K. In Figs. 7 and 16, as an example, the projection 29 of the fourth holder 19 from the top is allowed to face the guide groove 31 formed in the cam member 24.

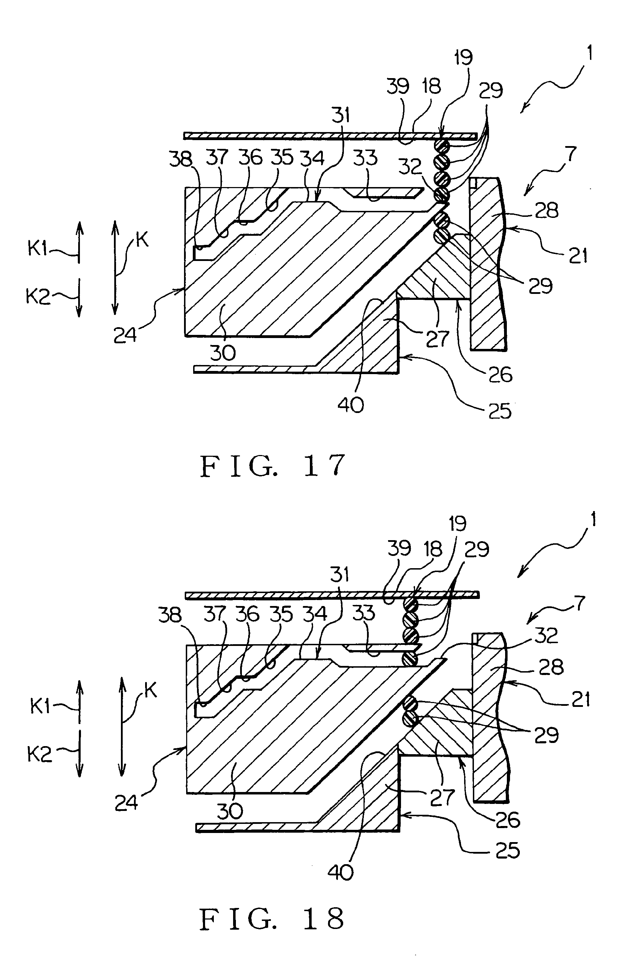

Then, the rotating member 26, movable member 25 and cam member 24 are integrally rotated by the drive force of the motor 20. Then, the projections 29 of all of the holders 19 are gradually parted from the connection wall 28. Then, as shown in Fig. 17, the projection 29 of the holder 19 holding a CD 2 selected to read out information therefrom enters into the opening 32 of the guide groove 31. Further, the projections 29 of the holders 19 holding the other CDs 2 come in contact with the wedge part 30 of the cam member 24 and move in the first and second groove 39, 40 due to the wedge part 30.

Further, when the rotating member 26, movable member 25 and cam member 24 are integrally rotated by the drive force of the motor 20, as shown in Fig. 18, the projection 29 of the holder 19 holding a CD 2 selected to read out information therefrom is positioned in the loading part 33.

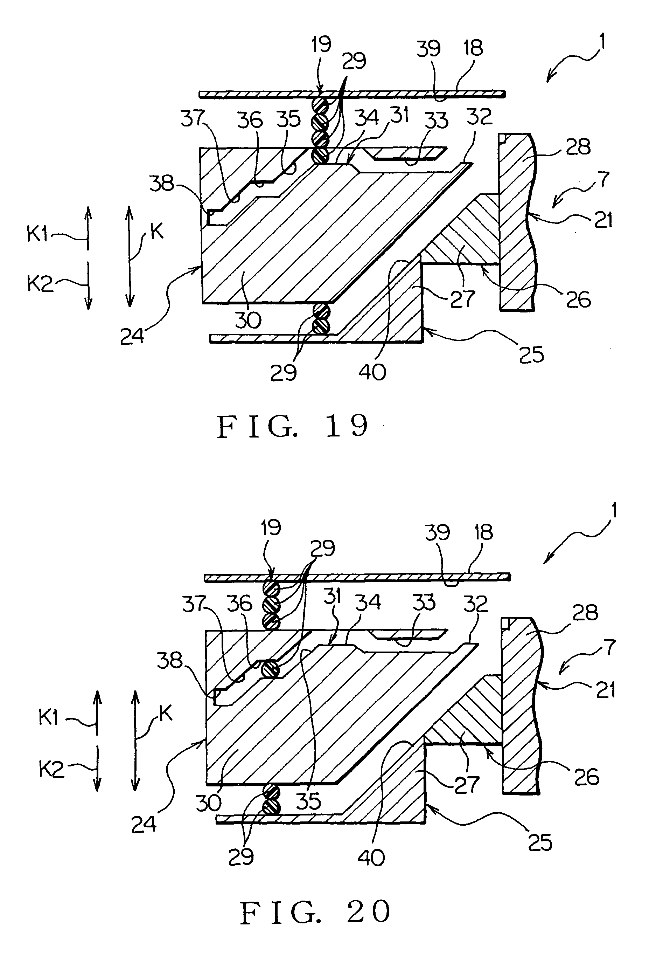

Thereafter, as shown in Fig. 19, the projection 29 of the holder 19 holding one CD 2 is positioned in the pickup entering part 34 of the guide groove 31. At that time, the oscillating chassis 17 rotates around one end thereof, so that the other end, that is, the turntable and the pickup playback part enters into between the one CD 2 and the other CD 2.

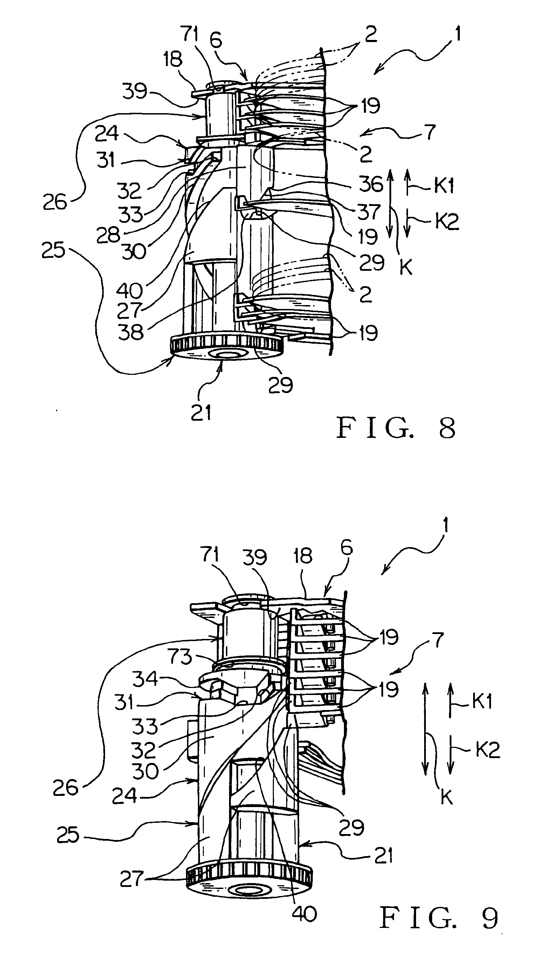

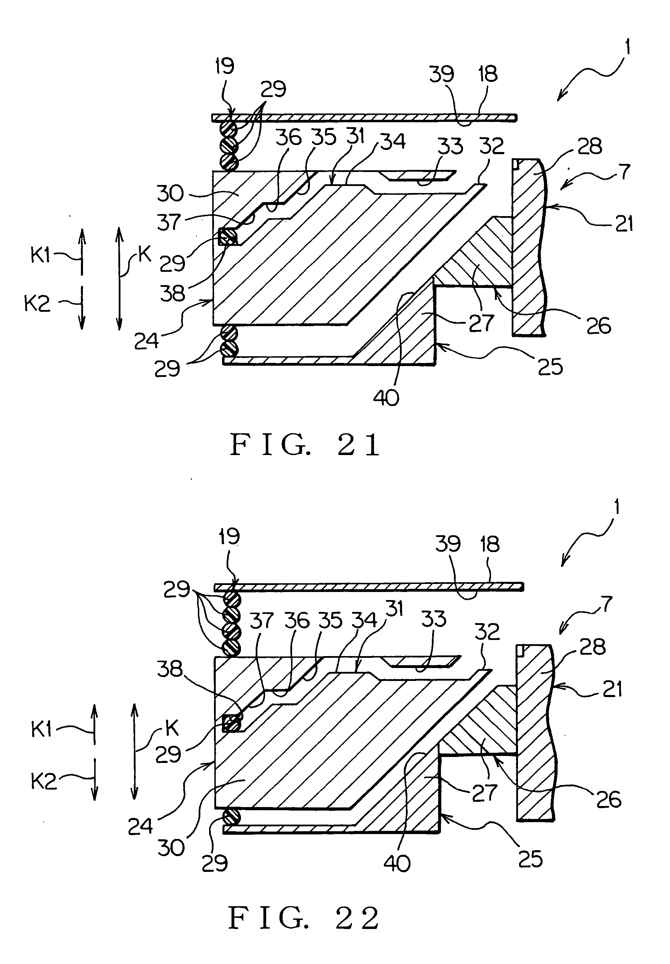

Then, the projection 29 of the holder 19 holding the one CD 2 passes in the first connecting part 35 and as shown in Fig. 20, is positioned in the clamp part 36. At that time, the turntable of the disk playback part 5 clamps the one CD 2. Then, the projection 29 of the holder 19 holding the one CD 2 passes in the second connecting part 37 and as shown in Figs. 8 and 21, is positioned in the playback part 38.

Further, the projection 29 of the holder 19 holding the CD 2 situated on the side of the arrow K1 relatively to the holder 19 holding the one CD 2 moves to the side situated away from the depth of the groove 39, that is, away from the connecting wall 28 due to the wedge part 30 of the cam member 24. Further, the projection 29 of the holder 19 holding the CD 2 situated on the side of the arrow K2 relatively to the holder 19 holding the one CD 2 moves to the side situated away from the depth of the groove 40, that is, away from the connecting wall 28 due to the wedge part 30 of the cam member 24.

Then, as shown in Figs. 8 and 21, the guide groove 31 formed in the wedge part 30 of the cam member 24 positions the holder 19 holding the one CD 2. Further, the wedge part 30 of the cam member 24, the movable chassis 18 and the second wall 27, that is, the first and second grooves 39, 40 part the holder 19 holding the one CD 2 from the other holders 19. Further, the first and second grooves 39, 40 position the other holders 19.

When the projection 29 of the holder 19 holding the one CD 2 is positioned in the playback part 38, the holder 19 is parted from the CD 2 clamped by the turntable of the disk playback part 5. Then, the holder 19 is prevented from interfering the rotation of the CD 2. The CD 2 clamped by the turntable is rotated and the optical pickup 66 of the pickup playback part reads out information from a desired position of the one CD 2. When the reading-out of the information from the desired position of the one CD 2 is ceased, the rotating member 25, movable member 26 and cam member 24 are rotated in the reverse direction by the drive force of the motor 20.

In the separating mechanism 21, the cam member 24 is moved along the direction of the arrow K by the drive force of the motor 20 so that the groove width of the first groove 39 and that of the second groove 40 are increased and decreased together so as to position the holder 19 holding the desired CD 2 and part the holder 19 holding the desired CD 2 from the other holders 19. Thus, the separating mechanism 21 parts the holder 19 that holds the one CD 2 from the other holders 19 along the direction of the arrow K.

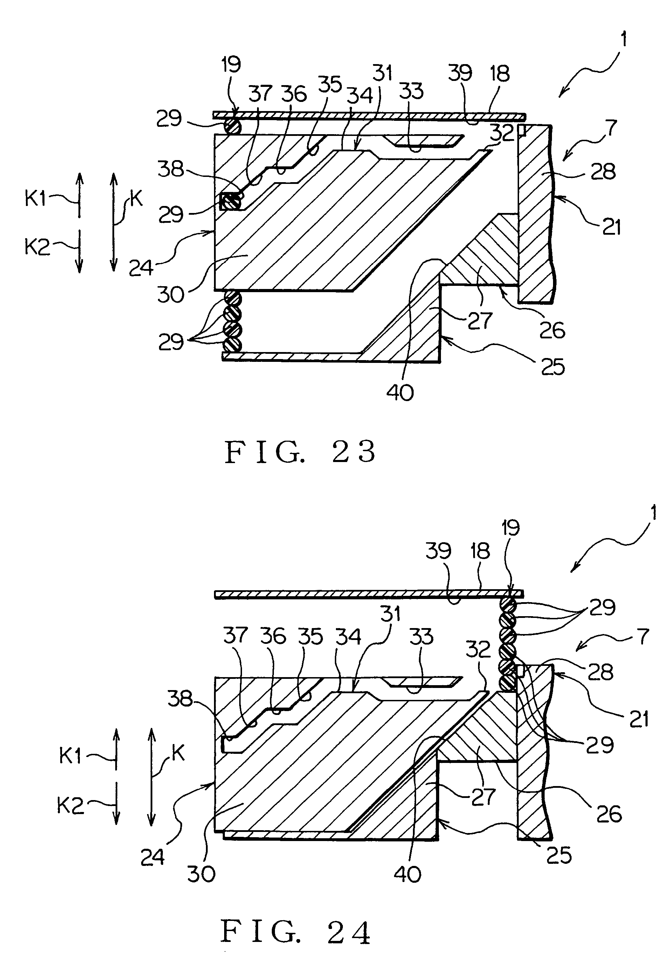

For example, a similar action takes place when the holder 19 holding the second CD 2 from the bottom is positioned at the playback position as shown in Fig. 22 and when the holder 19 holding the second CD 2 from the top is positioned at the playback position as shown in Fig. 23. On the conditions shown in Figs. 22 and 23, the first projection 43 is positioned in the first parallel part 49 and the second projection 45 is positioned in the second inclined part 51 as shown in Figs. 32 and 33.

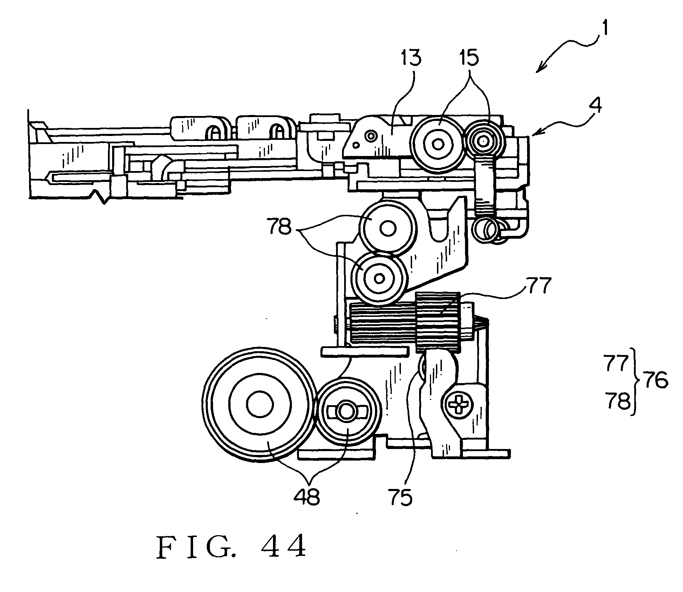

When the CD 2 is played back, the transmission restricting part 74 is held at the connecting position, and the disk carrying part 4, disk playback part 5 and disk receiving part 6 are moved along the direction of the arrow K by the positioning part 22 with the drive force of the motor 41. When the CD 2 is played back, except for a case in which the disk playback part 5 plays back a CD 2 held by a holder 19 positioned lowest in Fig. 15, as shown in Figs. 43 and 44, the gear 15 of the disk carrying part 4 and the gear 78 of the motive power transmitting part 76 are spaced from each other and therefore, they do not engage with each other.

When one CD 2 freely selected from a plurality of the CDs 2 received in the device body 3 is ejected from the device body 3 or when a CD 2 is loaded into the device body 3 so as to be held by a freely selected holder 19, as shown in Figs. 38 and 40, the transmission restricting part 74 is positioned at the connecting position by the drive force of the motor 20. Then, by the drive force of the motor 41, both the disk playback part 5 and disk receiving part 6, that is, both the cam member 24 and movable member 16 are set movable along the direction of the arrow K.

Then, as shown in Figs. 6, 9 and 24, the projections 29 of all of the holders 19 are allowed to come in contact with the connecting wall 28 by the drive force of the motor 20. Further, the other end of the oscillating chassis 17 of the disk playback part 5, that is, the turntable and the pickup playback part are retracted from between a plurality of the CDs 2.

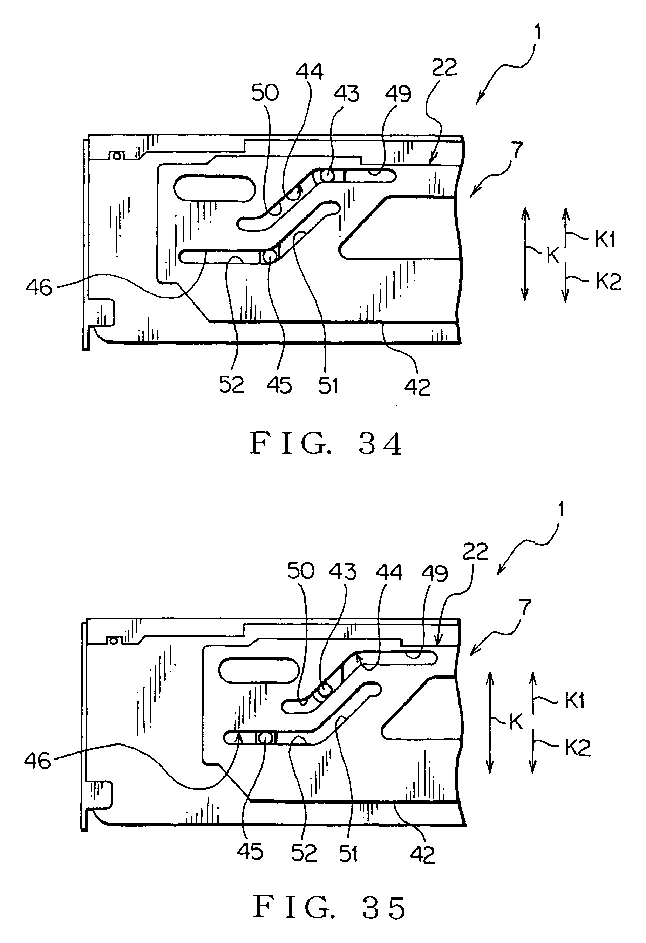

As shown in Fig. 34, the drive force of the motor 41 is transmitted to the positioning part 22 through the transmitting gear 81, gear 48 and rack 47 (i.e. the drive chassis 42 is slid) so that the drive chassis 42 is positioned at a position where the second projection 45 is positioned in the second parallel part 52 of the second hole 46. Then, as shown in Figs. 6, 9 and 24, the cam member 24 is positioned closest to the second wall 27 of the rotating member 25. Then, as shown in Fig. 42, the gear 15 of the disk carrying part 6 and the gear 78 of the motive power transmitting part 76 engage with each other. Therefore, the roller 14 is set rotatable by the drive force of the motor 41.

Then, the drive force of the motor 41 is transmitted to the positioning part 22 through the transmitting gear 81, gear 48 and rack 47 (i.e. the drive chassis 42 is slid) so that as shown in Fig. 35 the first projection 43 is allowed to move in the first inclined part 50 of the first hole 44. Then, the drive chassis 42 is positioned at a position where the projection 29 of one holder 19, which holds a CD 2 loaded in the device body 3 or ejects the held CD 2 from the device body 3 to the outside, faces the guide groove 31 along the direction crossing at right angles the direction of the arrow K.

Thus, as shown in Figs. 6, 9 and 25, the guide groove 31 of the cam member 24 is allowed to face the projection 29 of the holder 19 along the direction crossing at right angles the direction of the arrow K. In Figs. 6, 9 and 25, the projection 29 of the fourth holder 19 from the top is allowed to face the guide groove 31 of the cam member 24. Therefore, by the drive force of the motor 41, the disk receiving part 6 is moved along the direction of the arrow K, so that the one holder 19 described above is positioned at a position where a CD 2 loaded through the insertion slot 10 can be held.

Thereafter, the gear 67 is rotated by the drive force of the motor 20, so that the oscillating arm 79 is oscillated in a direction in which the end 79a of the oscillating arm 79 leaves the one circumferential plate 12 and the switching arm 80 is allowed to leave the one circumferential plate 12 against the bias force of the coil spring 83. Then, the transmitting gear 81 is allowed to come out between the worm 75 and the gear 48 and as shown in Figs. 39 and 41, the transmission restricting part 74 is positioned at the parting position. Then, the projection 29 of one holder 19 faces the opening 32 of the guide groove 31 of the cam member 24, which approaches nearest to the circular plate 68 of the rotating member 25, along the direction crossing at right angles the direction of the arrow K.

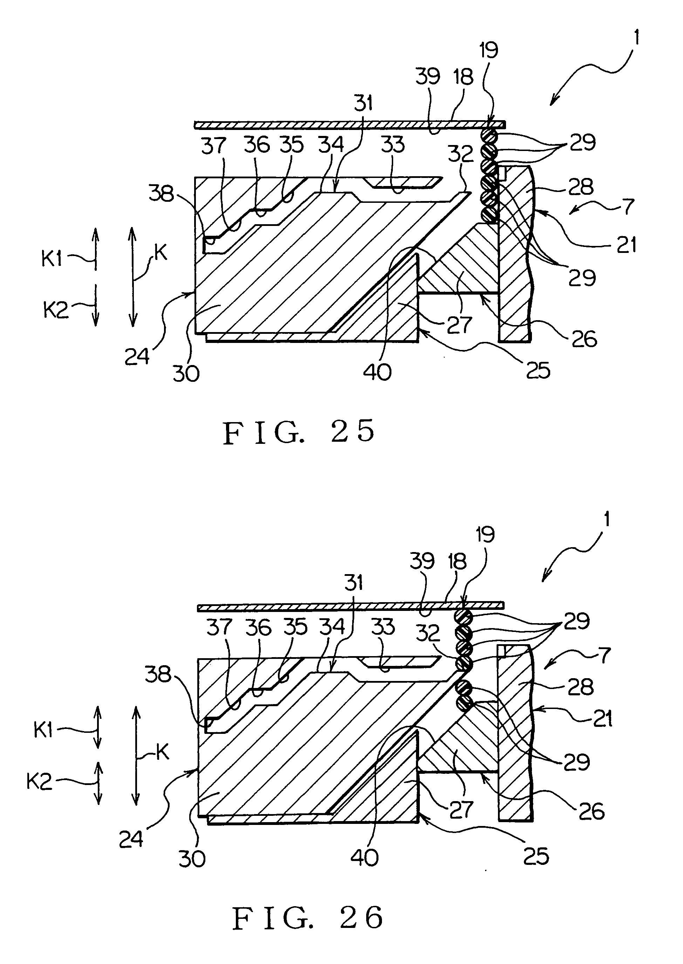

Then, the rotating member 25, movable member 26 and cam member 24 are integrally rotated by the drive force of the motor 20 (i.e. the separating mechanism 21 is rotated). Then, the projections of all of the holders 19 gradually leave the connecting wall 28. Then, as shown in Fig. 26, the projection 29 of the one holder 19 enters into the opening 32 of the guide groove 31. Further, the projection 29 of the other holder 19 comes in contact with the wedge part 30 of the cam member 24 and moves in the first and second grooves 39, 40 due to the wedge part 30.

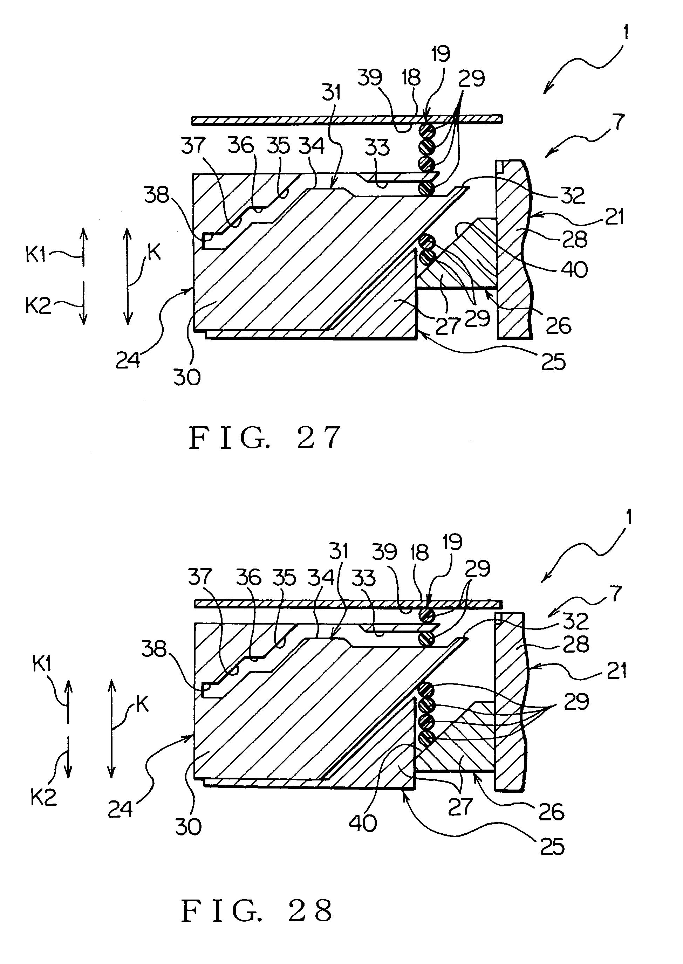

Further, when the rotating member 25, movable member 26 and cam member 24 are integrally rotated by the drive force of the motor 20, as shown in Figs. 10 and 27, the projection 29 of the one holder 19 is positioned in the loading part 33 of the guide groove 31. Further, the projection 29 of the other holder 19 moves to the depth of the first and second grooves 39, 40, that is, to the side situated away from the connecting wall 28 due to the wedge part 30 of the cam member 24.

Then, as shown in Figs. 10 and 27, the one holder 19 is positioned at the loading position by the guide groove 31 of the wedge part 30 of the cam member 24. Further, by the wedge part 30 of the cam member 24, movable chassis 18 and the second wall 27, that is, by the first and second grooves 39, 40, the one holder 19 described above is parted from the other holder 19. Further, the other holder 19 is positioned by the first and second grooves 39, 40.

Then, the drive force of the motor 41 is transmitted through the gears 78, 15 so as to rotate the roller 14 according to the direction in which the CD 2 is loaded or ejected. When the roller 14 is rotated, the CD 2 is loaded into or ejected from the device body 3 through the insertion slot 10.

When the loading or the ejecting of the CD 2 is finished, by the drive force of the motor 20, the separating mechanism 21 (i.e. the rotating member 25, movable member 26 and cam member 24) is rotated in the direction in which the projection 29 situated at the loading position comes out from the guide groove 31. Further, the gear 67 is rotated by the drive force of the motor 20 so that the oscillating arm 29 is oscillated in a direction in which an end 79a of the oscillating arm 29 approaches the one circumferential plate 12 and the switching arm 80 is allowed to approach the one circumferential plate 12 by the bias force of the coil spring 83. Then, the transmitting gear 81 is inserted into between the worm 78 and the gear 48 so as to position the transmission restricting part 74 at the connecting position. Then, the disk playback part 5 and the disk receiving part 6 are moved along the direction of the arrow K so as to play back the freely selected CD 2.

After the loading and ejecting of one CD 2 is finished, when another CD 2 is being loaded and ejected, by the drive force of the motor 20, the separating mechanism 21 is rotated in the direction in which the projection 29 situated at the loading position comes out from the guide groove 31. Further, the gear 67 is rotated by the drive force of the motor 20 so that the oscillating arm 29 is oscillated in a direction in which an end 79a of the oscillating arm 29 approaches the one circumferential plate 12 and the switching arm 80 is allowed to approach the one circumferential plate 12 by the bias force of the coil spring 83. The transmission restricting part 74 is positioned at the connecting position.

Then, the disk receiving part 6 is moved along the direction of the arrow K by the drive force of the motor 41 so that the projection 29 of the other holder 19 faces the opening 32 of the guide groove 31 of the cam member 24 along the direction crossing at right angles the direction of the arrow K. Thus, the other holder 19 is positioned at a position where the other holder 19 can hold the CD 2 loaded through the insertion slot 10. Then, the transmission restricting part 74 is positioned at the connecting position by the drive force of the motor 20 so as to load or eject the CD 2 through the insertion slot 10.

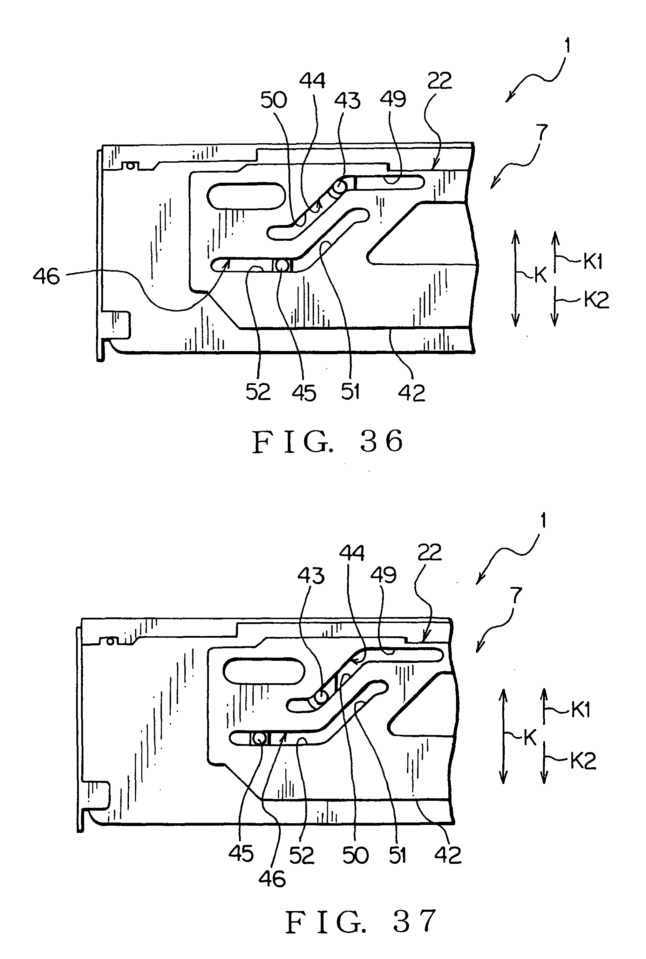

As described above, the cam member 24 is moved along the direction of the arrow K and each groove width of the first and second groove 39 and 40 is increased or decreased together, so that the desired holder 19 is positioned at the loading position and parted away from the other holders 19. For example, as shown in Fig. 28, a similar action takes place when the holder 19 holding the second CD 2 from the top is positioned at the loading position as shown in Fig. 28 and when the holder 19 holding the second CD 2 from the bottom is positioned at the loading position as shown in Fig. 29. On the conditions shown in Figs. 28 and 29, the second projection 45 is positioned in the second parallel part 52 and the first projection 43 is positioned in the first inclined part 50 as shown in Figs. 36 and 37.

According to the preferred embodiment, when the disk carrying part 4 carries the CD 2, the transmission restricting part 74 restricts the transmission of the drive force of the motor 40 to the positioning part 22. When the disk carrying part 4 carries the CD 2, the transmission of the motive power to the positioning part 22 is cut so that the positioning part 22 does not move the disk receiving part 6, that is, the positioning part 22 does not move the holder 19.

Thus, when the disk carrying part 4 carries the CD 2, the positioning part 22 is prevented from moving the disk receiving part 6, that is, from moving the holder 19, so that the holder 19 can hold the CD 2 carried by the disk carrying part 4 and the disk carrying part 4 can securely eject the CD 2 held by the holder 19 from the device body 3 to the outside. Therefore, even if the drive force of the motor 41 is transmitted to both the disk carrying part 4 and the positioning part 22, the disk carrying part 4 can securely carry the CD 2. Therefore, the identical motor 41 can be securely used for the disk carrying part 4 and the positioning part 22, thereby preventing the number of components from increasing and preventing the size of the device from being enlarged.

Since the disk carrying part 4 is movable together with the disk playback part 5, therefore when the optical pickup 66 of the disk playback part 5 plays back the CD 2, the disk carrying part 4 may be parted from the motor 41. The disk carrying part 4 may be parted from the motor 41, so that the drive force of the motor 41 may not be transmitted to the disk carrying part 4. When the CD 2 held by the holder 19 except the holder 19 situated lowest is played back, the gear 15 of the disk carrying part 4 does not engage with the gear 78 of the motive power transmitting part 76. Therefore, load applied on the motor 41 can be reduced, the size of the motor 41 can be small, and the electric power consumption can be reduced. Therefore, the size of the device can be prevented from being enlarged.

By the drive force of the motor 20 that transmits the motive power to the separating mechanism 21, the transmission restricting part 74 is moved in a range between the connecting position and the parting position. Therefore, there is no need to provide a drive source to move the transmission restricting part 74 exclusively. Therefore, the number of components can be prevented from increasing and the size of the device can be prevented from being enlarged.

The projection 29 of the holder 19 that holds a freely selected CD2 is allowed to engage with the guide groove 31. Each projection 29 of the other holder 19 situated on the side of the arrow K1 (i.e. upper side) relatively to the selected holder 19 is allowed to engage with the first groove 39, while each projection 29 of the other holder 19 situated on the side of the arrow K2 (i.e. lower side) relatively to the selected holder 19 is allowed to engage with the second groove 40. Thus, the projection 29 is allowed to engage with the guide groove 31, the first groove 39 or the second groove 40, so that the selected CD 2 is parted away from the other CDs 2 and information recorded in the selected CD 2 is read out.

By the separating mechanism 21, each groove width of the first and second grooves 39, 40 is changed together (i.e. relatively to each other), the sum of the groove width of the first groove 39 and that of the second groove 40 is approximately equal to a product of a groove width of a projection 29 and a number obtained by subtracting one from the number of the holders 19. Therefore, the holder 19 that holds the selected CD 2 and the other holders 19 can be positioned without looseness.

Therefore, the separating mechanism 21 changes each groove width of the first and second grooves 39, 40 together (i.e. relatively to each other) without using a coil spring, so that the holder 19 that holds the selected CD 2 can be separated from the other holders 19. Therefore, even if the CD changer 1 is mounted on a motor vehicle or the like and the vibration during travelling occurs, the holder 19 can be prevented from vibrating. That is, the holder 19 that holds the selected CD 2 can be securely positioned at the playback position. Even if the CD changer 1 is mounted on a motor vehicle or the like and the vibration during travelling occurs, information recorded in the selected CD 2 can be securely played back.

The separating mechanism 21 includes the movable member 26 and the cam member 24 that is provided to the movable member 26 movably along the direction of the arrow K. The first groove 39 is formed between the movable chassis 18 attached to the movable member 26 and the wedge part 30 of the cam member 24, the second groove 40 is formed between the second wall 27 of the movable member 26 and the wedge part 30 of the cam member 24, and the guide groove 31 is provided to the wedge part 30 of the cam member 24.

Therefore, the cam member 24 is slid along the direction of the arrow K so as to securely change each groove width of the first and second groove 39, 40 together (i.e. relatively to each other). The cam member 24 slides according to a position of the holder 19 that holds the selected CD 2. Therefore, the holder 19 that holds the freely selected CD 2 can be securely positioned at the playback position.

Since the cam member 24 and the optical pickup 66 move integrally (i.e. together), the relative position between the cam member 24 and the optical pickup 66 is always maintained constant. Therefore, the optical pickup 66 can securely play back the information recorded in the CD 2 held by the holder 19 that is positioned at the playback position by the guide groove 31 of the cam member 24.

When the information is read out from the CD 2, the movable member 26 is moved to the side of the arrow K1 so that the cam member 24 is slid according to a position of the holder 19 that holds the selected CD 2. Therefore, when the information is read out from the CD 2, any desired CD 2 can be positioned at the playback position. That is, information can be read out and played back from any CD 2.

When the CD 2 is loaded or ejected, the cam member 24 is moved to the side of the arrow K2 so that the movable member 26 is slid according to the position of the cam member 24 and a position of the holder 19 that corresponds to the CD 2 to be loaded into or ejected from the device body 3. Therefore, a relative position between the holder 19 that holds the CD 2 to be loaded into or ejected from the device body 3 and the device body 3 can be maintained constant. Therefore, the CD 2 can be securely loaded or ejected through the insertion slot 10 and the CD 2 loaded in the device body 3 can be securely held by the holder 19.

By the positioning part 22, such actions that the holder 19 is moved in a range between the receiving position and the playback position and positioned at the loading position can be carried out in a serial action. Therefore, the number of parts can be reduced and the cost can be reduced. A condition that the holder 19 is moved in a range between the receiving position and the playback position and a condition that the CD 2 is loaded or ejected can be smoothly switched.

The positioning part 22 includes: the drive chassis 42 having the first and second holes 44, 46; the first projection 43 provided to the movable chassis 18 of the disk receiving part 6; and the second projection 45 provided to the movable chassis 16 of the disk playback part 5. The first hole 44 includes the first inclined part 50 and the first parallel part 49, while the second hole 46 includes the second inclined part 51 and the second parallel part 52.

When the CD 2 is loaded or ejected, the second projection 45 moves in the second parallel part 52, while the first projection 43 moves in the first inclined part 50. Thereby, when the CD 2 is loaded or ejected, the movable chassis 18 of the disk playback part 5, that is, the cam member 24 is positioned without sliding. When the CD 2 is loaded or ejected, the movable chassis 18 of the disk receiving part 6 and the movable member 26, that is, the holder 19 move along the direction of the arrow K.

Therefore, a relative position between the holder 19 that holds the CD 2 to be loaded into or ejected from the device body 3 and the device body 3 can be maintained constant. Therefore, the CD 2 can be securely loaded or ejected through the insertion slot 10 and the CD 2 loaded in the device body 3 can be securely held by the holder 19.

When the holder 19 is moved in a range between the receiving position and the playback position, the first projection 43 moves in the first parallel part 49, while the second projection 45 moves in the second inclined part 51. Thereby, when the holder 19 is moved in a range between the receiving position and the playback position, the movable chassis 18 of the disk receiving part 6 and the movable member 26, that is, the holder 19 can be positioned without sliding. When the holder 19 is moved in a range between the receiving position and the playback position, the movable chassis 16 of the disk playback part 5, that is, the cam member 24 moves along the direction of the arrow K.

Therefore, when information is read out from the CD 2, any CD 2 can be securely positioned at the playback position. That is, the information can be read out and played back from any CD 2.

The movable member 26 is formed in a cylindrical shape and the cam member 24 is formed in a circular tube-shape. The movable chassis 18 and the second wall 27 are provided at both edges of the movable member 26. The movable member 26, cam member 24 and rotating member 25 are arranged coaxially and rotated integrally by the drive force of the motor 20. Thus, the movable member 26, cam member 24 and rotating member 25 are rotated so that the holder 19 can be moved in a range between the receiving position and the playback position. Therefore, the moving loci of the movable member 26, cam member 24 and rotating member 25 can be minimized, so that the device body 3, that is, the CD changer 1 can be small.

Further, sliding of the cam member 24 and the movable member 26 along the direction of the arrow K is carried out by using a single motor 41. Therefore, the number of the components can be small, the CD changer 1 can be small, and the cost can be reduced.

In the preferred embodiment described above, the CD changer 1 that receives a plurality of the CDs 2 as recording media is explained. However, instead, the present invention may be applied to a recording medium playback device that receives a plurality of other recording media, such as a mini disk (MD) changer that receives a plurality of MDs as recording media or a digital versatile disk (DVD) changer that receives a plurality of DVDs as recording media.

In the preferred embodiment described above, the cam member 24, rotating member 25 and movable member 26 are formed in a cylindrical shape and rotated around the axis so as to be moved. However, instead, the cam member 24, rotating member 25 and movable member 26 may be formed in a shape except for a circular tube or circular tube-shape, such as a plate-shape and moved in a direction except for the rotation around the axis, such as in a sliding direction.

In the preferred embodiment described above, the cam member 24 and the optical pickup 66 are moved integrally with each other. However, instead, the cam member 24 and the optical pickup 66 may be not moved integrally with each other provided that a relative positional distance between the cam member 24 and the optical pickup 66 is maintained constant.

In the preferred embodiment described above, by means of the positioning part 22, the movement of the cam member 24 and that of the movable member 26 are carried out by using a single drive source. However, instead, the movement of the cam member 24 and that of the movable member 26 may be carried out by using respective drive sources independent of each other.

According to the preferred embodiment described above, the following CD changer 1 can be attained.

### [Additional Remark 1]

A CD changer 1 including:
a motor 41;
a disk receiving part 6 for receiving a plurality of holders 19 arranged being laid on one another, said holder 19 being capable of holding a CD 2;
an optical pickup 66 for playing back the CD 2 received in the disk receiving part 6;
a disk carrying part 4 for carrying the CD 2 through an insertion slot 10 by drive force of the motor 41;
a positioning part 22 for moving the holder 19 along a direction K of the arrangement of the holders 19 by drive force of the motor 41 so as to position the holder 19 at a position where the holder 19 can hold the CD 2 carried through the insertion slot 10; and
a transmission restricting part 74 for restricting the drive force of the motor 41 to be transmitted to the positioning part 22 when the disk carrying part 4 carries the CD 2.

### [Additional Remark 2]

The CD changer 1 according to Additional Remark 1, wherein the disk carrying part 4 is movable together with the optical pickup 66 along the direction K of the arrangement of the holders 19.

### [Additional Remark 3]

The CD changer 1 according to Additional Remark 1 or 2 further including:
a separating mechanism 21 for parting the holder 19 of one CD 2 and the holder 19 of another CD 2 from each other along the direction K of the arrangement of the holders 19; and
a motor 20 for supplying drive force to the separating mechanism 21, wherein the transmission restricting part 74 is displaced by drive force from the motor 20 in a range between a connecting position where the drive force of the motor 41 is allowed to be transmitted to the positioning part 22 and a parting position where the drive force of the motor 41 is restricted to be transmitted to the positioning part 22.

According to the CD changer 1 defined in Additional Remark 1, when the disk carrying part 4 carries the CD 2, the transmission restricting part 74 restricts the transmission of the drive force of the motor 41 to the positioning part 22. When the disk carrying part 4 carries the CD 2, the transmission restricting part 74 cuts the transmission of the motive power to the positioning part 22 so as to prevent the positioning part 22 from moving the disk receiving part 6, that is, from moving the holder 19.

Thus, the transmission restricting part 74 prevents the positioning part 22 from moving the holder 19 when the disk carrying part 4 carries the CD 2, so that the holder 19 can hold the CD 2 carried by the disk carrying part 4 and the disk carrying part 4 can securely eject the CD 2 held by the holder 19. Therefore, even if the drive force of the motor 41 is transmitted to both the disk carrying part 4 and the positioning part 22, the disk carrying part 4 can securely carry the CD 2. Therefore, both the disk carrying part 4 and the positioning part 22 can securely use the common motor 41, thereby preventing the number of components from increasing and preventing the size of the device from being enlarged.

According to the CD changer 1 defined in Additional Remark 2, since the disk carrying part 4 is movable together with the disk playback part 5, therefore when the optical pickup 66 of the disk playback part 5 plays back the CD 2, the disk carrying part 4 may be parted from the motor 41. The disk carrying part 4 may be parted from the motor 41, so that the drive force of the motor 41 may not be transmitted to the disk carrying part 4. Therefore, load applied on the motor 41 can be reduced, the size of the motor 41 can be small, and the electric power consumption can be reduced. Therefore, the size of the device can be prevented from being enlarged.

According to the CD changer 1 defined in Additional Remark 3, By the drive force of the motor 20 that transmits the motive power to the separating mechanism 21, the transmission restricting part 74 is moved in a range between the connecting position and the parting position. Therefore, there is no need to provide a drive source to move the transmission restricting part 74 exclusively. Therefore, the number of components can be prevented from increasing and the size of the device can be prevented from being enlarged.

The aforementioned preferred embodiments are described to aid in understanding the present invention and variations may be made by one skilled in the art without departing from the spirit and scope of the present invention.

## Claims

1. A recording medium playback device comprising:
a drive source;
a receiving part for receiving a plurality of holding members arranged being laid on one another, said holding member being capable of holding a recording medium;
a playback part for playing back the recording medium received in the receiving part;
a carrying part for carrying the recording medium through an insertion slot by drive force of the drive source;
a positioning part for moving the holding member along a direction of the arrangement of the holding members by drive force of the drive source so as to position the holding member at a position where the holding member can hold the recording medium carried through the insertion slot; and
a transmission restricting part for restricting the drive force of the drive source to be transmitted to the positioning part when the carrying part carries the recording medium.

2. The device according to claim 1, wherein the carrying part is movable together with the playback part along the direction of the arrangement of the holding members.

3. The device according to claim 1 or 2 further comprising:
a separating element for parting the holding member of one recording medium and the holding member of another recording medium from each other along the direction of the arrangement of the holding members; and
a second drive source for supplying drive force to the separating element,
wherein the transmission restricting part is displaced by drive force from the second drive source in a range between a connecting position where the drive force of the drive source is allowed to be transmitted to the positioning part and a parting position where the drive force of the drive source is restricted to be transmitted to the positioning part.
